# EUROPEAN PATENT SPECIFICATION

(11) **EP 3 958 685 B1**
(45) Date of publication and mention of the grant of the patent: **31.12.2025**
(21) Application number: 20732572.1
(22) Date of filing: 11.06.2020
(51) Int. Cl.: A23G 1/00, A23G 1/32, A23G 1/48, A23G 3/36, A23G 3/48, A23L 7/10

(54) **FOODSTUFF AND PRODUCTS, INGREDIENTS, PROCESSES AND USES**
LEBENSMITTEL UND PRODUKTE, INHALTSSTOFFE, VERFAHREN UND VERWENDUNGEN
PRODUITS ALIMENTAIRES ET PRODUITS, INGRÉDIENTS, PROCÉDÉS ET UTILISATIONS

(30) Priority: 11.06.2019 EP 19179395
(43) Date of publication of application: 02.03.2022
(73) Proprietor: Société des Produits Nestlé S.A., 1800 Vevey (CH)
(72) Inventor: HARDWICK, Kathryn Elizabeth, Malton YO17 8 NG (GB); DE ACUTIS, Rodolfo, York YO91 1XY (GB); RADFORD, Stewart John, York YO26 9SG (GB); VIEIRA, Josélio Batista, YORK YO31 8LG (GB)
(74) Representative: Slaven, John William
(86) International application number: PCT/EP2020/066220
(87) International publication number: WO 2020/249683

(56) References cited:
- EP-A1- 3 114 942
- EP-A1- 3 498 102
- FIGUIERA A ET AL: "New Products from Theobroma cacao: Seed Pulp and Pod Gum", INTERNET CITATION, 1 January 1993 (1993-01-01), XP002219089, Retrieved from the Internet <URL:http://www.hort.purdue.edu/newcrop/proceedings1993/v2-775.htmlSA426> [retrieved on 10770101]
- ANONYMOUS: "The Ultimate Chocolate Blog: Search results for madre", 1 January 2015 (2015-01-01), XP055649838, Retrieved from the Internet <URL:https://ultimatechocolateblog.blogspot.com/search?q=madre> [retrieved on 20191205]
- FABIEN DECLERCQ ET AL: "Process for Extracting Sugars from Cocoa Pulp", RESEARCH DISCLOSURE, KENNETH MASON PUBLICATIONS, HAMPSHIRE, UK, GB, vol. 582, no. 84, 1 October 2012 (2012-10-01), pages 872, XP007141662, ISSN: 0374-4353

## Description

The present invention relates to a process for preparing a foodstuff product and a foodstuff product comprising multiple food-pieces bound together with a binder.

### BACKGROUND

Anonymous: "The Ultimate Chocolate Blog: Search results for madre",, 1 January 2015 (2015-01-01) https://ultimatechocolateblog.blogspot.com/search?q=madre discloses a chocolate comprising cocoa pulp and organic cocoa beans, organic sugar, organic cocoa butter, cocoa nibs, vanilla.

Whilst it is well known that the cocoa plant is harvested to produce cocoa seeds that are used to provide cocoa liquor, cocoa butter and cocoa powder, other portions of the cocoa pod are not utilised.

The cocoa pod consists of a husk, pulp and cocoa beans. The pulp is an aromatic, moist body that surrounds the pods.

In initial processing of the cocoa seed, the pulp is typically removed by fermentation and is hydrolysed by microorganisms. Hydrolysed pulp is known in the industry as "sweatings." During fermentation, the pulp provides the substrate for various microorganisms, which are essential to the development of chocolate flavour precursors, which are fully expressed later, during the roasting process. Although pulp is necessary for fermentation, often more pulp occurs than is needed.

Excess pulp has been used to produce cocoa jelly, alcohol and vinegar, nata, and processed pulp. By controlled fermentation and distillation, sweatings can be made into an alcoholic spirit containing over 40% ethanol. The alcohol produced can be further fermented to produce acetic acid.

Cocoa sweatings have been shown to be a suitable substrate for fermentation to produce nata, a product normally obtained from fermentation of coconut water.

Additionally, raw cacao pulp has been used to produce smoothies and other so-called "health" drinks.

Foodstuff components (water-based or fat-based) often contain a variety of sugars (or sugars sources) and/or polyol (e.g. glycerol, sorbitol) ingredients to maintain a microbiologically stable product at ambient storage temperatures, an enjoyable, pleasant taste and process-friendly rheology. In the pursuit of acceptable, authentic, clean-label ingredients from the perspective of the consumer: some current products contain ingredients are less preferred or may contain too long a list of overall ingredients.

In providing binders for foodstuff systems (typically water-based systems) a variety of sugar-rich ingredients are used in combination with each other (e.g. glucose syrup, inulin, sugar, fructose, high fructose corn syrup, glucose/dextrose, dextrose monohydrate, invert sugar/syrup) that either have negative consumer perceptions for a variety of reasons or the number of these ingredients would be a barrier to purchase. In addition, polyol (humectant) ingredients (e.g. glycerol, sorbitol) help to reduce water activity and viscosity of the final confectionery system/matrix but appear as more chemically sounding ingredients to consumers. Honey is a natural syrup that could be used but has drawbacks of a strong taste and prohibitively expensive for everyday products.

The present invention relates to utilising cocoa pulp, and other theobroma pulps, as a source of functionally important ingredients (sugars, fibres, proteins) in a single source ingredient, has a pleasant taste and has provenance (from cocoa origin).

### SUMMARY OF INVENTION

The present invention is defined by the claims.

The present invention discloses a process for preparing a foodstuff product comprising the steps of i) blending a food-pieces mix, with a binder, and ii) forming a foodstuff product from said mixture, wherein said binder comprises or consists essentially of ingredients derived from pulp from a plant in the theobroma genus and/or an extract of pulp from a plant in the theobroma genus, wherein the food-pieces mix is combined with the binder to provide a composition comprising between 7wt% and 45wt% binder by weight of the composition.

The present invention also discloses a foodstuff product comprising multiple food-pieces bound together with a binder, wherein said binder comprises or consists essentially of ingredients derived from pulp from a plant in the theobroma genus and/or an extract of pulp from a plant in the theobroma genus and the binder is present in an amount of between 7wt% and 45wt% of the foodstuff product.

The present invention relates to the use of a binder that comprises or consists essentially of ingredients derived from pulp from a plant in the theobroma genus and/or an extract of pulp from a plant in the theobroma genus.

The binder is used in foodstuffs, preferably ready to eat food bars, to bind, preferably dry, ingredients together.

Hence, the present invention provides a binder that is derivable from a single source (reduces processing complexity and costs) and includes "clean-label" ingredients without any loss in processing capability.

The present invention optionally utilises a method for drying pulp or an extract of pulp from plants of the theobroma genus along with a stabilizer. The drying method of an embodiment of the present invention provides an efficient drying process and technologies that are not detrimental to organoleptic attributes of pulp or an extract of pulp.

The dried pulp/extract of pulp maybe rehydrated to form a binder composition.

Additionally, the present invention preferably utilises a polysaccharide reduction step, preferably enzymatic treatment, allows an improvement of taste and texture of the pulp. More specifically, the application of pectinolytic and/or cellulolytic enzymes reduce the viscosity of the pulp or extract of pulp and, therefore, facilitate processability.

Generally, fruit based binders require additional ingredients such as humectants to provide a useable binder. However, the present invention provides a binder without the need for these additional ingredients. The present invention also provides binding properties without the need for additional ingredients.

The present invention provides advantageous properties in respect of a reduction, or entire removal, of added sugar, with the sweetness being provided from a natural source, that preferably also contains other components of the cocoa pod that contribute to the flavour of the foodstuff.

Additionally, the present invention provides the use of a by-product of the chocolate manufacturing process that is typically discarded. Hence, the present invention provides advantages in respect of sustainability.

Specifically, the present invention provides the compositions, methods and uses described in the claims.

### DESCRIPTION OF FIGURES

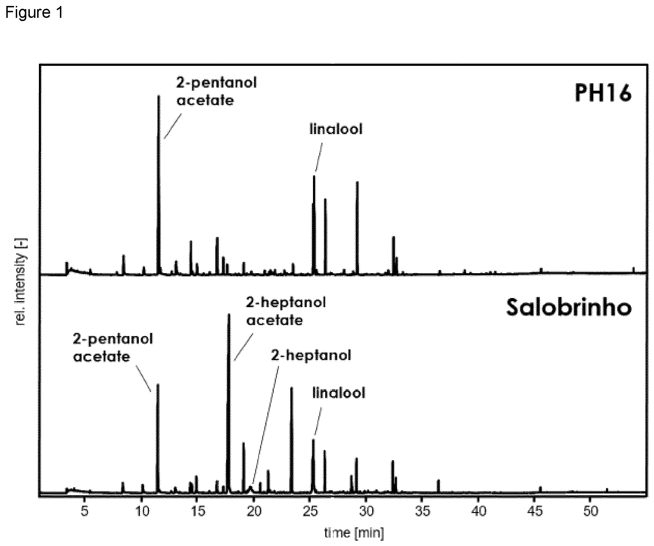

Figures 1 to 2 display GC-MS data for the Examples

### DETAILED DESCRIPTION

### Pulp

The pulp for use in the present invention is obtained from a plant or plants from the genus Theobroma, The plant genus comprises Theobroma angustifolium, Theobroma bicolor (mocambo), Theobroma cacao, Theobroma canumanense, Theobroma grandiflorum (cupuaçu), Theobroma mammosum, Theobroma microcarpum, Theobroma obovatum, Theobroma simiarum, Theobroma speciosum, Theobroma stipulatum Theobroma subincanum, and Theobroma sylvestre. Preferably, the pulp is selected from cacao, cupuagu and mocambo and mixtures thereof, preferably cacao.

The embodiments described below are preferably mentioned in respect of the preferred embodiment cocoa, but are equally applicable to pulp from all other plants in the genus Theobroma.

In the present invention, the term "pulp" relates to the mucilage-like coating around each bean. In the present invention, the term "cocoa pulp" also encompasses dried cocoa pulp, for example, in the form of a powder. However, where the term "dried cocoa pulp", for example, is used the cocoa pulp is limited to dried cocoa pulp. The origin of the cocoa pulp is not particularly limited and all known varieties of cocoa pod may provide the pulp. However, it is preferred that the sugar content of the cocoa pulp is as high as possible.

In the present invention, the term "extract" has the normal dictionary meaning, i.e. a portion of cocoa pulp comprising one or more components of cocoa pulp wherein one or more components of the original cocoa pulp have been removed to provide the extract. In the present invention, any water present in the cocoa pulp is not taken as being the extract, i.e. the cocoa pulp extract is not water. In an embodiment of the present invention, the cocoa pulp extract is in the form of a powder, i.e. the cocoa pulp extract has been dried to remove water.

It is a preferred embodiment of the present invention that the compositions obtained from the cocoa pulp or cocoa pulp extract are dried. The remaining moisture contents are defined below.

In the embodiments described below, the cocoa pulp extracts are defined and the components described are of course present in the original cocoa pulp, i.e. are not added.

In an embodiment, the cocoa pulp extract may be a composition that is obtained by a process comprising:
a. treating cocoa pulp or an extract of cocoa pulp (this extract is different from the extract prepared by this process) to reduce the polysaccharide content and/or treating cocoa pulp or an extract of cocoa pulp to adjust the pH,
b. drying the product of step a) optionally in combination with a stabilizer.

In a preferred embodiment of the present invention, cocoa pulp is treated by the above defined process to provide a composition that is a cocoa pulp extract. Accordingly, in the present application below the term "cocoa pulp extract" is used to encompass but is not limited to the composition obtained from the process of the invention, i.e. the composition of the invention may preferably be considered as cocoa pulp extract.

In an embodiment, the pulp of the present invention is not fermented.

In a preferred embodiment, the pulp of the present invention is treated in steps a. and/or b. in the absence of any beans from the plants of the theobroma genus. In a preferred embodiment, the treated pulp is not mixed with beans, preferably whole beans, from the plants of the theobroma genus. In a preferred embodiment, the treated pulp is not mixed with beans, preferably whole beans, from the plants of the theobroma genus. In a preferred embodiment, the treated pulp is not mixed with nibs from the plants of the theobroma genus.

In a preferred embodiment, the cocoa pulp of the present invention is treated in steps a. and/or b. in the absence of whole cocoa beans and/or cocoa nibs.

In an embodiment of the present invention, provided is an extract of cocoa pulp that comprises sugar.

In an embodiment, the sugar comprises monosaccharides (e.g. fructose, fucose, galactose, glucose and/or rhamnose), disaccharides (e.g. lactose, maltose and/or sucrose) and/or oligosaccharides (e.g. less than 20, less than 10 or less than 8 saccharide units) and it is here defined as "cocoa sugar". Preferred sugars present in the cocoa pulp or cocoa pulp extract include sucrose, glucose or fructose and mixtures thereof.

In an embodiment, the cocoa pulp extract sugar comprises sugars selected from the group consisting of glucose, sucrose and fructose and combinations thereof, and it is here defined as "cocoa sugar". The cocoa sugar may vary in content and nature based on the variety of the cocoa pod.

In an embodiment of the present invention, the cocoa pulp extract or dried cocoa pulp comprises between 20.0% and 100% by weight of cocoa sugar based on the total weight of the extract or pulp, more preferably between 30.0% and 99.75%, more preferably between 30.0% and 99.50%, more preferably between 30.0% and 99.25%, and more preferably between 40.0% and 95.0%.

In embodiments of the present invention, for example, the cocoa pulp extract or dried cocoa pulp contains between 50.0% and 95.0% by weight of cocoa sugar based on the total weight of the extract or pulp, more preferably between 60.0% and 95.0%, more preferably between 65.0% and 90.0%, more preferably between 65.0% and 85.0%, more preferably between 65.0% and 80.0%.

In an embodiment, the cocoa sugar in the cocoa pulp extract or dried cocoa pulp comprises a significant amount of sucrose, preferably a majority of sucrose. In an embodiment, the sucrose content of the sugar component is greater than 35.0% by weight based on the weight of the sugar component (i.e. the total sugar content), more preferably greater than 40.0%, more preferably greater than 45.0%, more preferably greater than 50.0% more preferably greater than 55.0%, and more preferably greater than 60.0%.

In an embodiment, the cocoa sugar component comprises less than 90.0% by weight of the sugar component of sucrose, preferably less than 85.0%, more preferably less than 80.0%, more preferably less than 75.0%.

In the above embodiments, the cocoa sugar comprises glucose, fructose or a mixture of glucose and fructose, preferably the sum of glucose, fructose and sucrose equates to greater than 95.0% by weight of the cocoa sugar component, more preferably greater than 97.5%, more preferably greater than 98.5%, more preferably greater than 99.0% and more preferably 100%.

In an alternative embodiment, the cocoa sugar in the cocoa pulp extract or dried cocoa pulp comprises a significant amount of glucose and fructose, preferably a majority of glucose and fructose. In an embodiment, the glucose and fructose content of the sugar component is greater than 45.0% by weight based on the weight of the sugar component, more preferably greater than 50.0%, and more preferably greater than 55.0%. For example, greater than 65.0%, greater than 75.0%, greater than 80.0%, or greater than 85.0%.

In an embodiment, the cocoa sugar component consists of 100%, or comprises less than 99.0% by weight of glucose and fructose, preferably less than 95.0%. For example, less than 92.0%, less than 90.0%, less than 87.0%, less than 85.0%, or less than 75.0%.

In an embodiment, the cocoa sugar component comprises between 45.0% and 100% of a combination of glucose and fructose based on the weight of the sugar component, preferably between 55.0% and 100% and preferably between 60.0% and 100% or between 80.0% and 99.0%.

In an embodiment, the fructose content of the sugar component is greater than 15.0% by weight based on the weight of the sugar component (i.e. the total sugar content), more preferably greater than 20.0%, more preferably greater than 25.0%, more preferably greater than 30.0% more greater than 35.0%, and greater than 40.0%.

In an embodiment, the cocoa sugar component comprises less than 75.0% by weight of the sugar component of fructose, preferably less than 70.0%, more preferably less than 65.0%, more preferably less than 60.0%.

In an embodiment, the cocoa sugar component comprises between 20.0% and 75.0% by weight of fructose, preferably between 30.0% and 60.0%.

In an embodiment, the glucose content of the sugar component is greater than 15.0% by weight based on the weight of the sugar component (i.e. the total sugar content), more preferably greater than 20.0%, more preferably greater than 25.0%, more preferably greater than 30.0% more greater than 35.0%, and greater than 40.0%.

In an embodiment, the cocoa sugar component comprises less than 75.0% by weight of the sugar component of glucose, preferably less than 70.0%, more preferably less than 65.0%, more preferably less than 60.0%.

In an embodiment, the cocoa sugar component comprises between 20.0% and 75.0% by weight of glucose, preferably between 30.0% and 60.0%.

In the above embodiments, the remainder of the cocoa sugar comprises sucrose, preferably the remainder of the sugar comprises sucrose, lactose, maltose, galactose or combinations thereof.

In a preferred embodiment, the sugar component of the cocoa pulp or cocoa pulp extract comprises between 0.10% and 50.0% or between 5.0% and 50.0% by weight of sucrose and the sugar component constitutes between 20.0% and 100% by weight of the cocoa pulp or cocoa pulp extract, preferably the cocoa pulp or cocoa pulp extract is dried.

In a preferred embodiment, the sugar component of the cocoa pulp or cocoa pulp extract comprises between 45.0% and 100.0% or between 45.0% and 99.0% by weight of fructose and glucose and the sugar component constitutes between 20.0% and 100% by weight of the cocoa pulp or cocoa pulp extract, preferably the cocoa pulp or cocoa pulp extract is dried.

In a preferred embodiment, the above sugar contents are obtained using HPAEC-PAD (High-Performance Anion-Exchange Chromatography with Pulsed Amperometric Detection). A preferred analysis method is defined in the examples section.

In an embodiment of the present invention, the cocoa pulp extract comprises further components selected from the list comprising of fibres, hydrocolloids, proteins, acids, polyphenols, phenolic-polymers, polysaccharides, methylxanthines and anti-oxidants (other than those encompassed by the other components listed). In a preferred embodiment, these are intrinsic components of the cocoa pulp and are not added separately.

In an embodiment of the present invention, the cocoa pulp extract comprises components selected from the list consisting of phenolic acids, catechin, epicatechin, and proanthocyanidins.

In an embodiment of the present invention, the cocoa pulp extract comprises pectin. In an embodiment, as discussed below, the cocoa pulp is treated to remove, preferably partially or essentially all, pectin and optionally to, preferably partially, remove other polysaccharides.

In an embodiment of the present invention, the cocoa pulp extract comprises lignin.

In an embodiment of the present invention, the cocoa pulp extract comprises cellulose or hemicellulose and a combination thereof. In an embodiment, as discussed below, the cocoa pulp is treated to remove, preferably partially or essentially all, cellulose or hemicellulose and a combination thereof and optionally to, preferably partially, remove other polysaccharides.

In an embodiment of the present invention, the cocoa pulp extract comprises components selected from the list consisting of caffeine, theobromine, and theophylline.

In an embodiment of the present invention, the cocoa pulp extract comprises an acid selected from the group consisting of citric acid, malic acid, tartaric acid and ascorbic acid and combinations thereof.

In an embodiment of the present invention, the fibre comprises dietary fibre.

In a preferred embodiment, the dietary fibre comprises insoluble and soluble dietary fibre.

In a preferred embodiment, the insoluble dietary fibre comprises cellulose, hemicellulose or a combination thereof. In a preferred embodiment, the soluble dietary fibre comprises pectin.

In a preferred embodiment, the average degree of polymerisation of the dietary fibre, preferably the insoluble and soluble components together, is greater than 12, preferably greater than 20, preferably greater than 30 and preferably greater than 40. In an embodiment, the average degree of polymerisation of the dietary fibre is less than 100, preferably less than 75. For example, between 40 and 75. In an embodiment, the average degree of polymerisation is obtained using SEC-MALS (Size Exclusion Chromatography - Multi Angle Light Scattering), for example, the sample was partially dissolved in DMSO.

In an embodiment, the dried pulp or pulp extract comprises between 0.0% and 80.0% by weight of dietary fibre based on the total weight of the extract or pulp, between 0.25% and 70.0%, between 0.5% and 70.0%, between 0.75% and 60.0%, and more preferably between 5.0% and 60.0%.

In an embodiment, the above percentages relate to dried pulp or extracts of pulp that have not been pre-treated by the methods of the present invention. In a preferred embodiment, the amount of dietary fibre in the dried pulp or pulp extract comprises lower amounts of dietary fibre owing to the treatment to reduce the content of polysaccharides, preferably a treatment with a cellulase and/or a pectinase. As mentioned below, the reduction in the amount of polysaccharides by the treatment of the present invention breaks down larger polysaccharides into smaller polysaccharides, oligosaccharides (preferably 3-8 saccharides or 3-10 saccharides), and/or di/mono-saccharides.

Accordingly, in an embodiment of the present invention, the dried pulp or extract of pulp, comprises less than 30.0% by weight of the dietary fibre based on the weight of the dried pulp or extract of pulp; preferably less than 20.0% by weight, preferably less than 15.0% by weight, or preferably less than 10.0% by weight, less than 5.0% by weight, or less than 2.5% by weight. For example, between 0.0% and 20.0% by weight of dietary fibre, or between 0.25% and 10.0% by weight of dietary fibre or between 0.25% and 5.0% by weight of dietary fibre.

In a preferred embodiment, the amount of dietary fibre provided by the processes of the present invention provides a total dietary fiber between 5.0% and 30.0% by weight of dietary fibre based on the total dry weight of the binder, preferably between 7.0% and 25.0%, more preferably between 8.5% and 22.5%, more preferably between 10.0% and 20.0%, and more preferably between 11.0% and 18.0%. In these embodiments, the processing and drying of the pulp products is improved by this content of dietary fibre.

The use of prolonged enzyme treatment times (e.g. around 20 hours) and/or filtering to provide compositions with high concentrations (e.g. 80wt% and greater) of sugars provide compositions that that are not straightforward to process and do not offer the necessary binding properties. The optional use of the stabiliser of the present invention improves this but the above compositions further improve the ease and effectiveness of drying and these are provided by the polysaccharide reduction methods of this invention, preferably the enzyme treatment steps.

In an embodiment, the total dietary fiber, and its fractions, in dried pulp or dried pulp extract is measured by the enzymatic-gravimetric method Rapid Integrated Total Dietary Fiber method as described in Journal of AOAC International, Volume 102, Number 1, January-February 2019, pp. 196-207(12).

Accordingly, in a preferred embodiment, the present invention provides a binder comprising:
- between 20.0% and 80.0% by weight of dextrose and fructose combined based on the weight of the binder, and
- between 5.0% and 30.0% by weight of dietary fibre based on the weight of the binder.

In a further preferred embodiment, the present invention provides a binder comprising:
- between 40.0% and 75.0% by weight of dextrose and fructose combined based on the weight of the binder, and
- between 10.0% and 30.0% by weight of dietary fibre based on the weight of the binder.

In a further preferred embodiment, the present invention provides a a binder comprising:
- between 5.0% and 75.0% by weight of dextrose and fructose combined based on the weight of the binder, and
- between 10.0% and 20.0% by weight of dietary fibre based on the weight of the binder.

The above percentages in these three embodiments are on a dry weight basis, i.e. not including the water content of the binder.

In an embodiment of the present invention, the cocoa pulp extract comprises a fibre component and an acid component, wherein the amount of fibre component is lower than the sugar component by 30% weight or more of the pulp extract.

Accordingly, in an embodiment of the present invention, the dried pulp or extract of pulp comprises (all % are by weight of the dried pulp or extract) between 20.0% and 100% by weight of sugar consisting of monosaccharides, disaccharides and/or oligosaccharides; between 0.0% and 80.0% by weight of dietary fibre; between 0.0% and 10% of an acid component, and between 0.0% and 10% by weight of water. In a preferred embodiment, the dietary fibre component is less than 20% by weight, preferably less than 5.0%.

In an embodiment of the present invention, the cocoa pulp extract is prepared by a process that comprises removing the cocoa pulp from the cocoa pod, thermally treating, optionally concentrating, and drying the cocoa pulp.

In an embodiment, the cocoa pulp is removed from the cocoa pod, for example, by the process of EP0442421 (Nestle SA). An alternative means of removing the cocoa pulp from the cocoa pods in an embodiment of the present invention is the use of a commercially available pulper, preferably fitted with brushes.

In the above embodiment, the thermal treatment step relates to treatment at high temperatures (typically 120°C to 160°C) for a very short period (typically no more than 200 seconds and optionally typically more than 50 seconds) to deactivate any microbial contaminants to make the ingredient safe for human consumption. Alternatively, different temperatures may be used, for example, 80°C to 100°C, and different times, for example 10 to 25 seconds. The thermal treatment step is not particularly limited, as long as pasteurisation occurs without product degradation.

In a preferred embodiment, the drying method of the present invention provides particles, preferably a powder. In an embodiment, the powder has a particle size, d50 (preferably diameter where 50% of the mass of the particles in the sample have a diameter below that value), preferably in the range of 20 to 1000 microns, preferably 200 to 800 microns or 20 to 150 microns. For example, 100 to 1000 microns, 25 to 100 microns or 35 to 200 microns. Preferably, laser diffraction is used to measure the particle size, d50 using a Malvern Mastersizer 2000, Method Scirocco 2000 dry attachment, Fraunhofer scattering theory.

Alternatively, the particle size is measured by mesh, e.g. has a particle size less than 18 mesh (1000 microns), less than 20 mesh (841 microns), less than 40 mesh (420 microns), less than 100 mesh (149 microns) and less than 140 mesh (105 microns) and preferably greater than 625 mesh (20 microns), greater than 550 mesh (25 microns), 140 mesh (105 microns) or greater than 70 mesh (210 microns).

The powder may be obtained from the dried cocoa pulp or dried cocoa pulp extract using standard refining methods, e.g. milling, ball milling, jet milling, 2-, 3- or 5-roll refiners.

Whilst it is preferable to process the cocoa pulp when fresh, in an embodiment, once depulped the cocoa pulp may be frozen to ensure freshness prior to subsequent treatment. This freezing may be carried out by standard equipment for freezing vegetable and fruit matter known in the art. If freezing is used at any point in the process of the present invention, the cocoa pulp or cocoa pulp extract is preferably subsequently defrosted prior to incorporation into the product of the invention.

In an embodiment, the cocoa pulp or cocoa pulp extract is treated to reduce the polysaccharide content to obtain a composition of the present invention.

The term polysaccharide relates to the dictionary definition of such polymers, i.e. a carbohydrate that consists of a number of molecules bonded together, preferably polysaccharides have greater than 8 saccharide units, greater than 10 units, or greater than 20 units and optionally less than 1000 units or less than 750 units.

The term encompasses both hetero- and homo-polysaccharides, linear and non-linear, for example.

In a preferred embodiment, the reduction in polysaccharide content means a degradation of the original polysaccharides, e.g. degradation of pectin, cellulose etc., into smaller polysaccharides, oligomers, and/or di/mono-saccharides. This degradation leads to a change in the molecular weight distribution of the polysaccharides, i.e. the molecular weight of the polysaccharides is lowered owing to the cleaving of the larger polysaccharides into smaller compounds.

Without being bound by theory, the reduction in polysaccharide content, preferably pectin and/or cellulose, leads to a reduction in any gelling and/or "jamming" effects caused when eating the products of the present invention.

In an embodiment, the cocoa pulp or cocoa pulp extract is treated to modify the viscosity, preferably to lower the viscosity.

In an embodiment, the viscosity is reduced by greater than 20%, preferably greater than 40%, more preferably greater than 60%, more preferably greater than 80% and more preferably greater than 90% relative to the viscosity of the untreated sample. In an embodiment, the viscosity is reduced by less than 98%, less than 95%, less than 75% or less than 70%. In an embodiment of the invention the viscosity is reduced by between 20% and 98%, i.e. the viscosity of the treated sample is reduced compared to that of the untreated sample with a higher percentage relating to a greater reduction. A method of measuring of the viscosity is given in the examples. As this is a relative value, the method used is not particularly important. However, preferably, the viscosity is dynamic viscosity measured in centipoises. A preferred specific method for measuring viscosity is present in the examples using a Rapid Viscosity Analyzer.

The treatment with an enzyme may lead to improved mouthfeel in foodstuff products, containing the binder composition of the present invention.

In an embodiment, the cocoa pulp or cocoa pulp extract is hydrolysed to reduce the polysaccharide content.

In an embodiment, the treatment of the cocoa pulp or cocoa pulp extract may increase the mono- and/or di- and/or oligo-saccharide content.

In an embodiment, the cocoa pulp extract production process comprises the treatment of the cocoa pulp or cocoa pulp extract with an enzyme. In an embodiment, the treatment with an enzyme lowers the viscosity of the cocoa pulp or cocoa pulp extract. This aspect of the invention provides advantages in respect of processing of the composition into products, and/or removes any potential unwanted organoleptic properties from using an overly viscous raw material.

In an embodiment, the treatment to reduce the polysaccharide content and/or to modify the viscosity may be done mechanically or physically, for example by centrifugation, preferably in a decanting centrifuge. This treatment may be used to remove polysaccharides present in the pulp.

In an embodiment, the temperature for enzyme treatment is between 20°C and 75°C, for example between 30°C and 65°C, between 55°C and 75°C or between 30°C and 55°C.

In an embodiment, the amount of enzyme used is between 10 mg/L and 250 mg/L of the cocoa pulp or cocoa pulp extract, preferably between 25 mg/L and 200 mg/L, preferably between 50 mg/L and 150 mg/L.

In an embodiment, the amount of enzyme used is between 1.0 g/L and 200 g/L of the cocoa pulp or cocoa pulp extract, preferably between 2.0 g/L and 100 g/L, preferably between 5.0 g/L and 50 g/L.

In an embodiment, the amount of enzyme used is between 0.05 ml/kg and 200 ml/kg of the cocoa pulp or cocoa pulp extract, between 0.1 ml/kg and 200 ml/kg, between 1.0 ml/kg and 200 ml/kg, preferably between 2.0 ml/kg and 100 ml/kg, preferably between 5.0 ml/kg and 50 ml/kg and more preferably 5.0 ml/kg and 20 ml/kg or 0.1 ml/kg and 10 ml/kg.

In an embodiment, the amount of enzyme used is between 0.10% and 20% of the weight of the cocoa pulp or cocoa pulp extract, preferably between 0.20% and 10%, more preferably between 0.5% and 5.0%. For example, between 0.15% and 5.0% and between 0.20% and 2.0%.

The above-amounts relate to all enzymes present, i.e. the total amount of enzyme used relative to the cocoa pulp or cocoa pulp extract.

In an embodiment, the above ratios are based on a solids content of the cocoa pulp or cocoa pulp extract of between 10% and 75%, preferably for cocoa pulp of between 10% and 20% total solids content, , i.e. the above enzyme treatments amount are on a wet % basis.

In an embodiment, the treatment process with an enzyme is carried out for between 10 minutes and 20 hours, between 10 minutes and 10 hours, 10 minutes and 8 hours, between 10 minutes and 6 hours, between 15 minutes and 4 hours, between 15 minutes and 3 hours, between 15 minutes and 2 hours or between 30 minutes and 2 hours.

In a preferred embodiment, the total enzyme used is between 0.15% and 5.0% and preferably between 0.25% and 2.0% on a wet% basis of the pulp or pulp extract and the treatment time is between 10 minutes and 6 hours, preferably between 15 minutes and 4.5 hours or between 30 minutes and 4 hours.

In an embodiment, the treated cocoa pulp or cocoa pulp extract is stored and the suspended particles settle, preferably this is at a temperature between 2.0°C and 10.0°C and preferably for a time period of between 12 hours and 72 hours (for example, at between 3.0°C and 5.0°C for between 24 hours and 60 hours). In an embodiment, the treated cocoa pulp or cocoa pulp extract is subsequently filtered using known filtration techniques in the field of fruit pulp processing to provide a purified product.

In an embodiment, the cocoa pulp or cocoa pulp extract is treated to remove or degrade pectin and/or cellulose, preferably by treatment with an enzyme.

In an embodiment, the cocoa pulp or cocoa pulp extract is treated with a pectinase, for example EC 4.2.2.10 (CAS 9033-35-6), EC 3.2.1.15 (CAS 9032-75-1), EC 3.1.1.11 (CAS 9025-98-3), EC 4.2.2.9 or EC 4.2.2.2 (CAS 9015-75-2) and mixtures thereof.

In a further embodiment, enzymes other than pectinase may be used, or mixtures of enzymes may be used. In an embodiment, the enzymes used may be selected from the group comprising lignin-modifying enzymes and carbohydrases (for example, arabanase/arabinanase, cellulase, beta-glucanase, hemicellulase and xylanase) and mixtures thereof.

In an embodiment, the cocoa pulp or cocoa pulp extract is treated with a cellulase, for example EC 3.2.1.4, EC 3.2.1.91 or EC 3.2.1.21, or EC 3.2.1.99 and mixtures thereof.

Pectinases are classified in respect of: 1) pectin, pectic acid or oligo-D-galacturonate is the substrate; 2) is the cleavage random (endo-, liquefying or depolymerising enzymes) or endwise (exo- or saccharifying enzymes) and 3) whether they act by hydrolysis or trans elimination. In a preferred embodiment, the enzyme used is selected from the group consisting of pectin esterases, polymethylgalacturonases (exo- or endo), polygalacturonases (exo- or endo), polymethylgalacturonate lyases (exo- or endo), polygalacturonate lyases (exo- or endo) and protopectinases (e.g. endo-1.5-alpha-L-arabinanase) and mixtures thereof.

In an embodiment, an enzyme is added to the cocoa pulp or cocoa pulp extract either prior to or subsequent to any drying step and/or concentration step. In an embodiment, the addition of the enzyme is subsequent to a process step where any innate enzymes in the cocoa pulp have been inactivated.

In an embodiment, the enzyme selection and reaction conditions may be optimised for the substrate to be treated. For example, it is well known that certain pectinases operate at their optimum at acidic pH and others at an alkaline pH (for example, see Table 2, Pectinases: Enzymes for fruit processing industry, International Food Research Journal 21(2): 447-453 (2014), which is incorporated by reference).

In an embodiment, the amount of pectinase used is between 10 mg/L and 250 mg/L of the cocoa pulp or cocoa pulp extract, preferably between 25 mg/L and 200 mg/L, preferably between 50 mg/L and 150 mg/L.

In an embodiment, the amount of pectinase used is between 1.0 g/L and 200 g/L of the cocoa pulp or cocoa pulp extract, preferably between 2.0 g/L and 100 g/L, preferably between 5.0 g/L and 50 g/L.

In an embodiment, the amount of pectinase used is between 0.05 ml/kg and 200 ml/kg of the cocoa pulp or cocoa pulp extract, between 0.1 ml/kg and 200 ml/kg, between 1.0 ml/kg and 200 ml/kg, preferably between 2.0 ml/kg and 100 ml/kg, preferably between 5.0 ml/kg and 50 ml/kg and more preferably between 5.0 ml/kg and 20 ml/kg or 0.1 ml/kg and 10 ml/kg.

In an embodiment, the amount of pectinase used is between 0.10% and 20% of the weight of the cocoa pulp or cocoa pulp extract, preferably between 0.20% and 10%, more preferably between 0.5% and 5.0%. For example, between 0.15% and 5.0% and between 0.20% and 2.0%.

The above-amounts relate to all pectinases present, i.e. if a mixture of enzymes is used, the total amount of pectinase used relative to the cocoa pulp or cocoa pulp extract.

In an embodiment, the pectinase has an activity of between 0.50 U and 1.50 U per gram of pulp, for example between 0.75 U and 1.25 U per gram of pulp.

Where appropriate, the enzymes may have an activity of between 1000 PGNU/ml and 30000 PGNU/ml, between 2000 PGNU/ml and 10000 PGNU/ml, for example between 3000 PGNU/ml and 8500 PGNU/ml.

Where appropriate, the enzymes may have an activity of between 50 PTF and 500 PTF, for example between 60 PTF and 400 PTF.

Where appropriate, the enzymes may have a polygalacturonase activity of between 2000 and 20000 micromol/min/g, for example between 3000 and 12000 micromol/min/g.

The activities of the various pectinases that may be used in the present invention are defined by the recited known standards. Polygalacturonase unit (PGNU) is defined as the amount of enzyme which will produce 1 mg of galacturonic acid sodium salt under standard conditions (acetate buffer, pH 4.5, 40°C, 10 minute reaction time, 540 nm) and is given per ml of substrate or the amount of enzyme required to release one micromol of galacturonic acid from polygalacturonic acid per minute in acetate buffer, pH 4.5, 40°Cand is given per ml or g of enzyme(preferably the latter method is used). Correspondingly, pectinesterase unit (PEU) activity is that amount of enzyme which consumes 1 micro equivalent of sodium hydroxide per minute under standard conditions (30°C, pH 4.5). Pectin lyase unit (PLU) is the quantity of enzyme that catalyses the split of bound endo alpha-1-4 galacturonosidyl (C6 Methyl ester) forming one micromole of delta-4,5 unsaturated product in one minute, according to the above conditions but at 45°C and pH 5.5. PTF unit activity corresponds an enzyme activity, which leads to an increase of the extraction of 0.01 after 1 minute, at pH 5.8 and 30°C at 235 nm in a 0.5 % pectin solution.

In an embodiment of the invention, the enzyme used in a treatment process of the present invention is selected from the group consisting of Ultrazym^{®}AFP-L (for example, from Novo Nordisk Ferment Ltd), Rohament^{®} PL, Rohapect^{®} TPL or PTF (AB Enzymes), Novozyme^{®} 33095, Pectinex^{®} Ultra AFP, UF, Ultra Colour or Ultra Clear (Novozymes A/S), Neopectinase PL1^{®} (Novozymes A/S), pectin lyase 1A (nzytech), Depol 793 (Biocatalyst), Rapidase^{®} Fibre (DSM) and mixtures thereof, for example.

In an embodiment, the cocoa pulp or cocoa pulp extract may be treated with other enzymes than pectinases or a mixture of a pectinase with another enzyme. The other enzymes may have activity against other polysaccharides (for example on glucans, cellulose, hemicellulose, arabinans, and/or beta-1,4-xylan) present in the cocoa pulp.

In an embodiment, the amount of cellulase used is between 0.05 ml/kg and 200 ml/kg of the cocoa pulp or cocoa pulp extract, between 0.10 ml/kg and 150 ml/kg, preferably between 0.1.0 ml/kg and 100 ml/kg, preferably between 5.0 ml/kg and 50 ml/kg and more preferably between 5.0 ml/kg and 20 ml/kg or between 0.1 ml/kg to 10 ml/kg.

In an embodiment, the amount of enzyme used is between 0.10% and 20% of the weight of the cocoa pulp or cocoa pulp extract, preferably between 0.20% and 10%, more preferably between 0.5% and 5.0%. For example, between 0.15% and 5.0% and between 0.20% and 2.0%.

The above-amounts relate to all cellulases present, i.e. if a mixture of enzymes is used, the total amount of cellulase used relative to the cocoa pulp or cocoa pulp extract.

In an embodiment, the above ratios are based on a solids content of the cocoa pulp or cocoa pulp extract of between 10% and 75%, preferably for cocoa pulp of between 10% and 20% total solids content.

The activity of the various cellulases that may be used in the present invention are defined by the recited known standards. One cellulase unit (U) is defined as the amount of enzyme that causes the release of 1.25 micromole of glucose equivalents per minute at pH 4.6 and 40°C. One cellulolytic unit (ACU) is determined based upon the reduction of viscosity of a guar gum solution. In a preferred embodiment, the activity is between 400 and 3000 micromol/min/g, for example between 500 and 2500 micromol/min/g.

In an embodiment of the invention, the enzyme used in a treatment process of the present invention is selected from the group consisting of Cellulase 13L (Biocatalysts), Cellulase CE-3, Cellulase FG conc. (Enzyme Development Corporation), Cellulosin GMY and mixtures thereof, for example.

In an embodiment, the enzyme treatment may be carried out using at least two carbohydrases, optionally at least three carbohydrases, optionally at least four carbohydrases and optionally less than 20 carbohydrases or less than 10 carbohydrases.

In an embodiment, a mixture of enzymes is used with an activity of greater than 60 FBGU, optionally greater than 75 FBGU. Optionally, the activity is less than 180 FBGU, optionally less than 150 FBGU, and optionally less than 125 FBGU. For example, between 60 FBGU and 180 FBGU. One Fungal Beta-Glucanase Unit (FBGU) is the enzyme quantity which hydrolyzes fungal beta-glucan to reducing sugars corresponding to 1 µmol glucose per minute at pH 5.0 at 30°C.

In an embodiment, the cocoa pulp or cocoa pulp extract is treated with the mixture of enzymes between 1 hour and 7 hours, preferably between 2 hours and 5 hours.

In an embodiment, the cocoa pulp or cocoa pulp extract is treated with Viscozyme L (Novozymes A/S), which is a multi-enzyme complex containing a wide range of carbohydrases including arabanase, cellulase, beta-glucanase, hemicellulase, and xylanase.

In an embodiment, the enzymes used in the treatment may be deactivated, preferably prior to any drying of the cocoa pulp and/or cocoa pulp extract. Any suitable process may be used for this deactivation, for example, treatment at 80-110°C for a time period of preferably between 2 minutes and 10 minutes, for example 5 minutes.

In an embodiment, the cocoa pulp or cocoa pulp extract is treated to increase the pH, for example the cocoa pulp is treated with an alkaline salt or base. The nature of the compound is not particularly limited, but is preferably a food-grade compound. In a preferred embodiment, the cocoa pulp is treated with compound such as mono-/di-/tri- sodium-/potassium-/calcium-phosphates, mono-/di-ammonium phosphate, sodium hydroxide, calcium hydroxide, potassium hydroxide, sodium carbonate, calcium carbonate, or potassium carbonate and mixtures thereof in order to increase the pH.

In an embodiment, the alkaline salt or base is combined with the cocoa pulp or cocoa pulp extract at an amount of greater than 0.10wt% of the cocoa pulp or cocoa pulp extract, preferably greater than 0.15wt% and preferably greater than 0.20wt%. In an embodiment, the alkaline salt or base is combined with the cocoa pulp or cocoa pulp extract at an amount of less than 1.25wt% of the cocoa pulp or cocoa pulp extract, preferably less than 1.0wt% and preferably less than 0.90wt%, for example between 0.10wt% and 1.25wt%, between 0.20wt% and 0.90wt% or between 0.25wt% and 0.85wt%.

In an embodiment, as mentioned above, the pH of the cocoa pulp is increased to be higher than the range of 2.75-4.0, optionally greater than 3.3-4.0 or 3.0-3.7 (all measured at 20°C), for example, the pH is increased to be greater than 4.5, greater than 5.0, greater than 5.5 or greater than 6.0. For example, the pH is increased but is not increased to be greater than 8.0, not greater than 7.5 or not greater than 7.0 or not greater than 6.5 or not greater than 6.0.

In a preferred embodiment, the agent to increase the pH is added as an aqueous solution or slurry to the pulp. In a preferred embodiment, the concentration of the agent in water is between 5g/100ml and 50g/100ml, preferably between 10g/100ml and 30g/100ml. Preferably by adding the agent as an aqueous solution or slurry, undesired gelling does not occur which may increase viscosity of the pulp when higher concentrations of agent are added.

In an embodiment, the enzymatic treatment is carried out after the treatment to increase the pH. In an alternative embodiment, the enzymatic treatment is carried out before the pH treatment.

In an embodiment, the enzymatic treatment is carried out when the pH of the pulp is between 3.3 and 6.0, preferably between 4.25 and 5.0.

In an alternative embodiment, the pH treatment is carried out using dialysis (ion exchange). For example, using the processes disclosed in EP0049497 (Nestle SA).

In an embodiment, the process comprises treatment of the cocoa pulp in order to maximise the sugar content of the extract. In an embodiment, this treatment is to increase the amount of monomeric saccharides at the expense of dimeric, trimeric, oligomeric and/or polymeric saccharides or increase the trimeric and/or oligomeric content at the expense of polymeric saccharides. In an embodiment, this treatment may be enzymatic.

An embodiment of the present invention comprises the following steps: depulping of cocoa pods, pasteurisation of the pulp (e.g. thermal treatment), optionally enzymatic treatment and/or optionally alkalinisation treatment and drying (preferably by freeze-drying, vacuum drying or spray-drying). In a preferred embodiment, provided is a process comprising: depulping of cocoa pods, pasteurisation of the pulp (e.g. thermal treatment), enzymatic treatment and/or alkalinisation treatment and drying (preferably by freeze-drying, vacuum drying or spray-drying). The pasteurisation step may be any appropriate point in the process, e.g. may also be after enzyme treatment.

An embodiment of the present invention comprises the following steps: depulping, optional freezing, optional defrosting, enzymatic treatment, optional pasteurisation, alkalinisation and drying.

An embodiment of the present invention comprises the following steps: depulping, freezing, defrosting, enzymatic treatment, pasteurisation, alkalinisation and drying.

An embodiment of the present invention comprises the following steps: depulping, optional freezing, optional defrosting, alkalinisation, enzymatic treatment, pasteurisation and drying.

An embodiment of the present invention comprises the following steps: depulping, freezing, defrosting, alkalinisation, enzymatic treatment, pasteurisation and drying.

In the above embodiments, the alkalinisation step relates to pH adjustment and may occur before or after the enzymatic treatment, preferably after.

The present invention provides advantageous properties in respect of a reduction, or entire removal, of added sugar, with the sweetness being provided from a natural source, that also contains other components of the cocoa pod that contribute to the flavour of the chocolate.

In respect of added sugar, in an embodiment, the term "added sugar" refers to refined sugar, which encompasses processed sugars, e.g. white or brown sugars, which have their standard nutritional definitions. Preferably, as recited in Regulation (EC) No 1924/2006, the present invention relates to chocolate products where sugars have not been added and the product does not contain any added mono- or disaccharides or any other food used for its sweetening properties other than sugars that are inherently naturally present in the ingredients.

Accordingly, the present invention provides an alternative for added sugars by providing naturally occurring sugars that are present in the source of cocoa mass, cocoa butter and/or cocoa powder. Thus, the present invention provides a non-added sugar chocolate product containing natural sugar.

### Drying Step

In an embodiment, the pulp or extract of the pulp may be dried and/or concentrated to form a re-hydratable powder and/or concentrated to form a syrup for use as a binder.

In an embodiment, the drying is preferably carried out using spray drying, vacuum drying, drum drying, oven-drying, foam drying, tray drying, fluid bed drying, crystallization drying (preferably using a seed crystal of sugar) or freeze-drying (lyophilization).

In an embodiment, the drying takes place at greater than 45°C, preferably greater than 50°C preferably greater than 55°C and greater than 60°C. In an embodiment, the drying takes place at less than 125°C, preferably less than 100°C, preferably less than 90°C and preferably less than 85°C or less than 80°C. In a preferred embodiment, the drying takes place between 45°C and 100°C and more preferably between 45°C and 85°C.

In an embodiment, the drying takes place for greater than 1 hour, preferably greater than 5 hours, preferably greater than 10 hours, greater than 15 hours or greater than 20 hours. In an embodiment, the drying takes place for less than 72 hours, preferably less than 60 hours, preferably less than 50 hours or less than 40 hours.

In a preferred embodiment, the drying takes place between 45°C and 125°C and between 1 hour and 72 hours. Preferably, the above ranges relates to oven-drying, optionally with- or without-vacuum.

In the present invention, the theobroma genus pulp or extract thereof, preferably cocoa pulp or extract of cocoa pulp, is dried preferably using spraying and drying, preferably using spray drying.

In order to increase the stability (and subsequent properties once incorporated into a product, e.g. organoleptic properties) and processing efficiency of the pulp or extract of pulp, the spray drying step is carried out using a stabilizer.

In a preferred embodiment, the addition of the stabilizer improves diffusion in liquid, easing water evaporation. Without being bound by theory, the stabilizer may improve "dry-ability" by improving moisture diffusion (e.g., thus making extraction of water from the sprayed droplet faster) and it prevents powder sticking in the spray-drying equipment.

Again, without being bound by theory, either the stabilizer increases the glass transition temperature (low Tg being the main cause of "stickiness" for amorphous materials, typically the case for small sugars such as fructose being present in cocoa pulp). In such case, the sticky amorphous materials and the high Tg stabilizer should be miscible at a molecular level in order to obtain a mix of the two amorphous materials with a higher Tg than the sticky material alone.

Additionally or alternatively, the stabilizer prevents the caking by "embedding" the sticky amorphous materials into a non-sticky structure, such as fibers. In such case the fibers (e.g. cocoa powder or fibers, dietary fibers,) will mechanically prevent the sticky materials agglomerating by creating bridges (e.g. act as a "spacer").

The above is important for drying pulp or extract of pulp owing to the composition of the pulp which impacts the applicability and efficiency of known drying processes to effectively and viably dry the pulp-based composition. The drying method may also impact the organoleptic properties of any pulp-based composition or foodstuff comprising the composition.

In an embodiment, the stabilizer has a glass transition temperature, denoted Tg, greater than or equal to 40 °C, preferably of at least 45°C or higher, preferably at least 50°C or higher and more preferably at least 55°C or higher. In an embodiment of the present invention, the glass transition temperature is lower than 85°C, preferably lower than 80°C, optionally lower than 75 °C or lower than 70 °C. A preferred example is a glass transition temperature between 40°C and 85°C.

Several techniques can be used to measure the glass transition temperature and any available or appropriate technique can be used, including differential scanning calorimetry (DSC) and dynamic mechanical thermal analysis (DMTA). A specific example of an applicable DSC uses a TA Instrument Q2000. A double scan procedure was used to erase the enthalpy of relaxation and get a better view on the glass transition. The scanning rate was 5 °C/min. The first scan was stopped approximately 30 °C above Tg. The system was then cooled at 20 °C/min. The glass transition was detected during the second scan and defined as the onset of the step change of the heat capacity.

In a preferred embodiment, the stabilizer is selected from the group consisting of cocoa powder, cocoa fibres, guar gum, psyllium husk, carnuba wax, glycerin, beta glucan, polysaccharides (such as starch or pectin for example), dietary fibres (including both insoluble and soluble fibres), polydextrose, methylcellulose, maltodextrins, inulin, milk powder (for example skimmed milk powder), whey, demineralised whey powder, dextrins such as soluble wheat or corn dextrin (for example Nutriose^{®}), soluble fibre such as Promitor^{®} and any combination thereof.

In a preferred embodiment, the above stabilizers contain starch and fibers, which a) act as "spacers" within the composition to avoid stickiness in the product and/or b) favour the drying by increasing the hygrostability (i.e. increase of Tg).

In an embodiment, the stabiliser is selected from the group consisting of dietary fibre from cereals and/or grains (e.g. oat bran, maize bran, rice bran, barley bran, wheat bran, spent grain), citrus fibre, cocoa powder or cocoa fibre and combinations thereof.

In a preferred embodiment, the stabiliser is cocoa powder, cocoa fibre or a combination thereof.

The cocoa powder may be alkaline cocoa powder or natural cocoa powder. The cocoa powder may be defatted cocoa powder.

In more detail, the cocoa powder is not limited on its origin and processed according to any methods known in the art (e.g. to improve taste, texture and/or appearance). It may, for example, be tempered to obtain a tempered cocoa powder, alkalized or "dutched" to improve colour and/or flavour, or milled to obtain a finer or more uniform composition.

In embodiment, the cocoa powder may have a D50 particle size of 2-20 microns. This is the standard particle size for commercially available cocoa powder.

As is standard in the art, the cocoa powder may generally contain 10 to 12wt% cocoa butter but may also be a high-fat cocoa powder or a reduced-fat cocoa powder. A high-fat cocoa powder will contain more than 12wt% cocoa butter. Typically, it will contain more than 20wt% cocoa butter. Examples of high-fat cocoa powders contain 20-24wt% cocoa butter. A reduced-fat cocoa powder is a cocoa powder with a cocoa butter content below 10wt% by weight. As is standard in the art, if the cocoa butter content is reduced to 5% by weight or less, the cocoa powder will be referred to as a "defatted cocoa powder". Defatted cocoa powders will preferably contain less than 2wt% cocoa butter by weight.

In a preferred embodiment, the cocoa fibre is derived from cocoa husk or cocoa bean shells, optionally roasted. The cocoa fibre may be prepared by known methods and the source is not particularly limited.

In a preferred embodiment, the content of the stabilizer in a wet basis in a composition also comprising pulp and/or pulp extract is at least 4.0% by weight of the composition, preferably at least 5.0 wt%, preferably at least 6.0 wt% or at least 7.5 wt% or at least 10.0 wt%.

In a preferred embodiment, the content of the stabilizer in a wet basis in a composition also comprising pulp or pulp extract is at most 25.0% by weight of the composition, preferably at most 20.0 wt%, preferably at most 17.5 wt% and more preferably at most 15.0 wt%.

In a preferred embodiment, the amount of the stabilizer in a wet basis in a composition also comprising pulp or pulp extract is at least 4.0% by weight of the composition and at most 25.0% by weight of the composition.

In a preferred embodiment, the content of the pulp and/or pulp extract in a wet basis in a composition also comprising stabilizer is at least 75.0% by weight of the composition, preferably at least 80.0 wt%, preferably at least 82.5 wt% and more preferably at least 85.0 wt%.

In a preferred embodiment, the content of the pulp and/or pulp extract in a wet basis in a composition also comprising stabiliser is at most 96.0% by weight of the composition, preferably at most 95.0 wt%, preferably at most 94.0 wt% and more preferably at most 92.5 wt% or at most 90.0 wt%.

In a preferred embodiment, the amount of the pulp and/or pulp extract in a wet basis in a composition also comprising stabilizer is at least 75.0% by weight of the composition and at most 96.0% by weight of the composition.

The above compositions relate to pre-drying.

In a preferred embodiment, post drying, the content of the stabilizer in a dry basis in a composition also comprising dried pulp and/or dried pulp extract is at least 10.0% by weight of the composition, preferably at least 20.0 wt%, preferably at least 25.0 wt% and more preferably at least 30.0 wt% or at least 35.0 wt%.

In a preferred embodiment, the content of the stabilizer in a dry basis in a composition also comprising dried pulp or dried pulp extract is at most 60.0% by weight of the composition, preferably at most 55.0 wt%, preferably at most 50.0 wt% and more preferably at most 45.0 wt%.

In a preferred embodiment, the amount of the stabilizer in a dry basis in a composition also comprising dried pulp or dried pulp extract is at least 10.0% by weight of the composition and at most 60.0% by weight of the composition.

In a preferred embodiment, in the above embodiments, the remainder of the composition is the pulp and/or pulp extract, i.e. the composition consists of the pulp and/or pulp extract and stabilizer.

In a preferred embodiment, the content of the dried pulp and/or dried pulp extract in a dry basis in a composition also comprising stabilizer is at least 40.0% by weight of the composition, preferably at least 45.0 wt%, preferably at least 50.0 wt% and more preferably at least 55.0 wt%

In a preferred embodiment, the content of the dried pulp and/or dried pulp extract in a dry basis in a composition also comprising stabiliser is at most 90.0% by weight of the composition, preferably at most 80.0 wt%, preferably at most 75.0 wt% and more preferably at most 70.0 wt% or at most 65.0wt%.

In a preferred embodiment, the amount of the dried pulp and/or dried pulp extract in a dry basis in a composition also comprising stabilizer is at least 40.0% by weight of the composition and at most 90.0% by weight of the composition.

In a preferred embodiment, the amount of the dried pulp and/or dried pulp extract in a dry basis in a composition is at least 40.0% by weight of the composition and at most 90.0% by weight of the composition, and the amount of the stabilizer is at least 10.0% by weight of the composition at most 60.0% by weight of the composition.

In an embodiment of the present invention, a composition comprising dried pulp extract and/or the dried pulp and the stabilizer comprises less than 10.0% by weight of water, preferably less than 8.0%, more preferably less than 7.5%, more preferably less than 6.0%, and more preferably less than 5.0% based on the weight of the composition. In an embodiment, it is noted that entire dehydration is potentially not achievable, thus, the water content is optionally greater than 0.1%, greater than 0.5% or greater than 1.0%. In a preferred embodiment, the water content above may be measured using Karl Fischer analysis, for example, using Karl Fischer analysis, Orion 2 Turbo with methanol:formamide 2:1.

In a preferred embodiment, the drying efficiency (specifically low throughput) may be controlled by the viscosity of the mixture of pulp and/or pulp extract and stabilizer prior to drying. In a preferred embodiment, the viscosity is less than 40 mPa.s at 1000 s-1, preferably is less than 35 mPa.s at 1000 s-1 and more preferably is less than 30 mPa.s at 1000 s-1. A specific method for measuring viscosity is present in the examples using a Rapid Viscosity Analyzer.

In an embodiment, the viscosity may be controlled by adding extra water or concentrating the above-mixture in order to arrive at an appropriate total solids content. In a preferred embodiment, the total solids content is between 25% and 50% by weight prior to drying, preferably the total solids content is between 30% and 40% by weight. Concentration of the mixture may be done by known methods, preferably not at temperatures that cause degradation of the mixture (e.g. less than 90°C, preferably less than 85°C) and/or using vacuum evaporation (e.g. less than 100 mbar, preferably less than 75 mbar). A preferred method is displayed in the examples.

In a preferred embodiment, the inlet air temperature is between 90°C and 160°C, preferably between 100°C and 150°C, and more preferably between 110°C and 140°C.

In a preferred embodiment, the output temperature is between 60°C and 110°C, preferably between 70°C and 100°C, and more preferably between 75°C and 90°C.

In a preferred embodiment, the pressure used in the spray drying is between 20 bars and 100 bars, preferably between 30 bars and 80 bars, and more preferably between 40 bars and 70 bars.

In a preferred embodiment, the flow rate of the solution to be dried is between 10 L/hour and 35 L/hour, preferably between 15 L/hour and 30 L/hour and most preferably between 17 L/hour and 25 L/hour.

In a preferred embodiment, the present invention provides a free-flowing powder that presents a pleasant aromatic smell, is sweet and fruity owing to the non-degradation of the pulp owing to the use of a stabilizer and/or drying conditions.

In an embodiment of the present invention, the pulp extract, a dried pulp extract or the dried pulp comprises less than 10.0% by weight of water, preferably less than 8.0%, more preferably less than 7.5%, more preferably less than 6.0%, and more preferably less than 5.0% or less than 3.0%. In an embodiment, it noted that entire dehydration is potentially not achievable, thus, the water content is optionally greater than 0.1%, greater than 0.5% or greater than 1.0%.

In a preferred embodiment, the water content above may be measured using Karl Fischer analysis, for example, using Karl Fischer analysis, Orion 2 Turbo with methanol:formamide 2:1.

In an embodiment, the drying step occurs as soon as possible after the pulp has been isolated from other components from the pod.

### Binder

The binder of the present invention comprises, substantially comprises or consists essentially of ingredients derived from pulp from a plant in the theobroma genus and/or an extract of pulp from a plant in the theobroma genus.

The pulp or extract of pulp can be processed into a dry powder (see the methods described above relating to drying the pulp) and re-hydrated to form a binder, preferably in the form of a syrup.

The pulp or extract of pulp may preferably be pre-treated by the methods described above, e.g. polysaccharide reduction (hydrolysis) and/or pH reduction. This is preferably carried out prior to any drying and/or concentration steps.

Alternatively, in an embodiment, the pulp or extract of pulp may be concentrated to form a binder, preferably in the form of a syrup. In an embodiment, the concentration step includes a filtration step and/or a heating step, preferably contains a heating step, preferably heating until boiling and/or heated until simmering.

In an embodiment, the filtration step may take place by any known method to remove fibres from fruit juice, fruit pulp etc. In an embodiment, this filtration may be carried out using a muslin cloth, sieve, mesh or other mechanical means or as described above. Alternatively, the methods disclosed above relating to polysaccharide reduction, preferably enzymatically, may be used. The advantages of the enzymatic method disclosed above over known mechanical filtration steps are in an increasing in improvement of processing and handling properties with a desirable reduction in viscous gel-like behaviour.

In a preferred embodiment, the heating step in the concentration step is carried out between 30 minutes and 3 hours, preferably 1 hour and 2 hours 3 minutes. In a preferred embodiment, the heating step in the concentration step is carried out using a heating element at between 750W and 1500W, preferably between 1000W and 1300W.

In an embodiment, the pulp or extract of pulp is concentrated to a water content of between 5% and 30% by weight of the pulp or extract of pulp to form the binder.

In a preferred embodiment, the binder comprises water in an amount of greater than 5% by weight of the binder, preferably greater than 10% by weight, and preferably greater than 13% by weight. In a preferred embodiment, the binder comprises water in an amount of less than 30% by weight of the binder, preferably less than 25% by weight and most preferably less than 20% by weight. For example, between 5% and 30%. In a preferred embodiment, the above water amounts relate to the binder being in the form of a syrup.

Water content of the binder may be determined by a direct Karl Fischer titration based on the ISO 5381:1983 method with the following adaptations: The titration was performed at 50°C with a 751 GPD Titrino instrument from Metrohm. The test portion was added to a methanol/formamide mixture (2/1 v/v). After homogenization of the sample with a Polytron high speed homogenizer, the titration of the reacting water was performed with a Karl Fischer reagent (Hydranal^{®} Composite 5, Sigma-Aldrich) up to the equivalence point, which was determined by voltametry.

Alternatively, the water content may be determined by oven drying. For example, 5g of a binder were put in a 102°C fan oven for 3 hours. The measured mass before and after was looked at for percentage weight loss.

In an embodiment, in the binder, the water activity, Aw, is between 0.30 and 0.70, preferably between 0.40 and 0.70, preferably between 0.45 and 0.65 and preferably between 0.50 and 0.60.

Water activity is measured according to the AOAC method 978.18 and performed at 25°C, after equilibrium is reached, using a HygroLab instrument from Rotronic.

In an embodiment, the total solids content of the binder is between 70% and 95% by weight of the binder, preferably between 75% and 90% and more preferably between 80% and 87%. Total solid content (%) of the binder equals 100 minus moisture content (%) of the binder as measured by the methods described above.

In an embodiment, the binder comprises a significant amount of glucose and fructose, preferably a majority of glucose and fructose based on the total solids content. In an embodiment, the glucose and fructose content of the binder is greater than 45.0% by weight based on the weight of the binder, more preferably greater than 50.0%, more preferably greater than 55.0%, and more preferably greater than 60.0%.

In an embodiment, the binder comprises less than 90.0% by weight of glucose and fructose, preferably less than 85.0%. For example, less than 80.0%, less than 75.0%, or less than 70.0%.

In an embodiment of the present invention, the binder comprises less than 15.0% by weight of dietary fibre based on the weight of the binder, preferably less than 12.0% by weight, preferably less than 10.0% by weight, or preferably less than 8.0% by weight, less than 5.0% by weight, or less than 4.0% by weight. For example, between 0.0% and 15.0% by weight of dietary fibre, or between 0.25% and 10.0% by weight of dietary fibre or between 0.25% and 5.0% by weight of dietary fibre. In a preferred embodiment, these % relate to pulps not treated by, for example, the enzymes mentioned above. The above percentages are on a wet basis of the binder, i.e. including the moisture content.

As discussed above, if the pulp is treated with the polysaccharide reduction method of the invention, preferably with the enzymatic methods disclosed above, the binder comprises less than 25.0% by weight of dietary fibre based on the weight of the binder, preferably less than 20.0% or preferably less than 16.0% by weight. In an embodiment, the binder comprises more than 4.0% by weight of dietary fibre based on the weight of the binder, preferably more than 5.0% or more than 6.0% by weight. The above percentages are on a wet basis of the binder, i.e. including the moisture content.

For example, between 4.0% and 25.0% by weight of dietary fibre, or between 5.0% and 20.0% by weight of dietary fibre or between 6.0% and 16.0% by weight of dietary fibre. The above percentages are on a wet basis of the binder, i.e. including the moisture content.

In a highly preferred embodiment, in order to ensure improved processing into foodstuffs, the pulp and/or pulp extract treated by the polysaccharide reduction method of the present invention comprises between 20.0% and 80.0% by weight of pulp sugar based on the wet weight of the binder (i.e. including moisture), more preferably between 30.0% and 77.5%, more preferably between 40.0% and 75.0%, more preferably between 45.0% and 70.0%, more preferably between 45.0% and 65.0%.

In a preferred embodiment, the above sugars comprise monosaccharides, preferably dextrose and fructose. In a preferred embodiment, the above ranges apply to the total amount of dextrose and fructose, i.e. the binder of the present invention comprises between 20.0% and 80.0% by weight of dextrose and fructose combined based on the wet weight of the binder (i.e. including moisture), more preferably between 30.0% and 77.5%, more preferably between 40.0% and 75.0%, for example between 45.0% and 70.0% or between 50.0% and 65.0%.

The amounts of sugars and fibres are measured by the methods described herein and mentioned in the examples.

In an embodiment, the binder has a Brix degree of between 75% and 95%, preferably between 80% and 92%, and preferably between 83% and 90%, to prepare a base composition.

In an embodiment, the Brix value is measured using a hand held refractometer known in the art.

In an embodiment of the present invention, the presence of the pulp and/or the extract of cocoa pulp affords a binder that is distinguished over previously known binder compositions.

In a preferred embodiment, the present invention provides a binder composition that comprises pentanol-acetate, preferably 2-pentanol acetate.

In a preferred embodiment, the present invention provides a binder composition that comprises heptanol-acetate, preferably 2- heptanol acetate.

The above results are preferably obtained using GC-MS (Gas chromatography mass spectrometry), preferably the GC-MS protocol set out in the examples of this specification. The above results may be obtained from peak areas of the respective peaks when measured according to the standard mentioned in the examples.

### Foodstuff Products

The present invention provides new foodstuffs comprising the materials of the present invention. The material described in the present invention acts as binder.

Accordingly, the foodstuffs of the present invention include ready-to-eat food bars (preferably cereal bars, nut bars, granola bars etc.), granola, breakfast cereal, extruded products, biscuits, wafers, and nut clusters. In a preferred embodiment, the products may be baked.

In a preferred embodiment, the foodstuff product comprises-pieces selected from fruit-pieces, cereal-pieces, nut-pieces, chocolate-product-pieces, confectionery-pieces, fish-pieces, meat-pieces, dairy-pieces and vegetable-pieces and mixtures thereof.

In a preferred embodiment, the foodstuff product comprises-pieces selected from fruit-pieces, cereal-pieces, nut-pieces, dairy-pieces and vegetable-pieces and mixtures thereof.

The pieces may take the form of those commonly used, for example pieces (individual or plurality of individual smaller pieces agglomerated), chunks, slices, powders, clumps, clusters, chips, flakes, crisps/crispies etc.

In an embodiment, the fruit-pieces may be hard or soft fruits, preferably dried. The nature of the fruit-pieces is not limited. For example, orange, strawberry, grape, apple, pear, banana, apricot, raisins, sultanas, pineapple, mango, etc. may all be used.

Cereal-pieces may be used, these may be whole grain or processed using standard methods.

Cereals are monocotyledonous plants of the Poaceae family (grass family) cultivated for their edible, starchy grains. Examples of cereals include barley, brown rice, wild rice, buckwheat, bulgur, corn, millet, oat, sorghum, spelt, triticale, rye, wheat, wheat berries, teff, canary grass, Job's tears and fonio. Plant species that do not belong to the grass family also produce starchy seeds or fruits that may be used in the same way as cereal grains, are called pseudocereals. Examples of pseudocereals include amaranth, buckwheat, tartar buckwheat and quinoa. When designating cereals, this will include both cereal and pseudocereals.

Whole grain cereal products are products made from unrefined cereal grains. Whole grains contain the entire edible parts of a grain: germ, endosperm and bran. Whole grain products may be provided in a variety of forms such as ground, flaked, cracked or other forms, as is commonly known in the milling industry.

Accordingly, food grade crops (such as cereal grains) and that are suitable for use in the present invention are selected from the group consisting of: warm season cereals (such as maize kernels; finger millet; fonio; foxtail millet; Kodo millet; Japanese millet; Job's Tears; maize (corn); pearl millet; proso millet; and/or sorghum); cool season cereals (such as barley,wheat, oats, rice, rye, teff, triticale and/or, wild rice); pseudo cereal grains; (such as starchy grains from broadleaf plant families: amaranth buckwheat, smartweed and/or quinoa); grain legumes and/or pulses (such as lentil, pea, chickpeas, common beans, fava beans, garden peas, lentils, lima beans, lupins, mung beans, peas, peanuts, pigeon peas, runner beans and/or, soybeans), cassava (Maihot esculenta) and/or any suitable combinations and/or mixtures thereof.

In an embodiment of the present invention, nut-pieces include culinary nuts and botanical nuts, for examples, chestnuts, hazelnuts, Brazilian nut, almond, peanut, cashew nut, pistachio, or combinations thereof.

In an embodiment, confectionery-pieces is not particularly limited, it preferably contains fat-based or sugar-based confectionery and preferably includes toffee, caramel, biscuit, sugar-based confectionery etc.

In an embodiment, a preferred sub-set of confectionery-pieces is pieces of chocolate products which may comprise dark, white and/or milk chocolate, compound, cocoa nibs etc.

In an embodiment, dairy-pieces includes cheese and/or yogurt-pieces.

In granola bars, the food-pieces mix can also comprise optional components such as dried fruit-pieces, nut-pieces, and chocolate-pieces. Mixtures thereof are also possible. Dried fruits may be orange, strawberry, grape, apple, pear, banana, apricot etc. Nuts may be chestnut, walnut, peanuts, almonds, hazelnuts.

In savoury bars, the food-pieces mix can comprise fish-pieces, meat-pieces, cheese-pieces, vegetable-pieces, and mixtures thereof. These pieces are not limited by their nature.

As detailed above, the process for preparing a foodstuff product comprises the following two steps: i) blending a food-pieces mix with a binder, and ii) forming a foodstuff product from said mixture.

In an embodiment, the term mix means more than one piece, preferably a plurality of pieces.

In an embodiment, the foodstuff product is prepared by mixing food-pieces and a binder together to form a composition, wherein the composition comprises greater than 10wt% binder by weight of the composition, preferably greater than 12wt%, preferably greater than 15wt% and preferably greater than 20wt%.

In an embodiment, the composition comprises less than 45wt% of binder, preferably less than 40wt%, preferably less than 35wt%, preferably less than 30wt%, and preferably less than 25wt%. For example, between 10wt% and 45wt% and between 15wt% and 35wt%.

In an embodiment, the remainder of the above compositions are the food-pieces. Accordingly, in an embodiment, the food-pieces mix is combined with the binder to provide a composition comprising between 55wt% and 90wt% food piece mix by weight of the composition.

In an embodiment, the foodstuff product may be baked, this reduces the moisture content of the binder. Accordingly, in the final product, the amount of binder will be lower than in the mixed composition defined above. Hence, in embodiments, the foodstuff product comprises between 7wt% and 43wt% binder, preferably between 8wt% and 38wt%, preferably between 10wt% and 30wt% based on the weight of the foodstuff product.

The binder is preferably intimately and gently blended with a food-pieces mix. Usually, the food-pieces are dry-pieces. A single-screw mixer or a batch cooker may be used for heating the binder and blending it with the food-pieces mix. In an embodiment, mixing particles and binder may be carried out by means of any gentle, especially continuous mixer which does not damage the cereal particles, such as a screw mixer of the helical spring type with an axial sprinkling nozzle, a coating drum or a paddle mixer, for example.

The binder should be fluid enough to coat the food-pieces evenly. At a too low temperature, the binder remains too viscous and there is a risk that dry food-pieces get broken by friction. At a too high temperature, it may not bring an improved blending, it may provoke undesired reactions in the binder and is associated to increased energy consumption. However, the binder of the present invention is typically fluid at ambient temperatures and slightly higher, e.g. 18°C to 30°C. If the binder is not flowable, it may be heated to a flowable state, preferably at a temperature from 25°C to 85°C. Usually, the temperature is comprised between 30°C and 80°C. The optimal temperature can be determined by a skilled artisan.

The next step is the forming of foodstuff products into edible shapes, for example bars or clusters. For example, the mass obtained above may be formed into a bar shape by sheeting-cutting, sheeting-moulding, moulding or pressing through an opening and cutting.

In an embodiment, the final mixture is formed into a layer by feeding the mixture between two rollers. The layer may then be cooled down, if necessary. Cooling the layer of mixture may be achieved in a cooling tunnel. The final temperature is chosen so that the binder sets. The binder viscosity should be high enough to set rapidly the layer, but still remain elastic to allow shaping and cutting. If the binder viscosity is too low, it will flow to the bottom of the layer, making the layer sticky and not cohesive. Usually, the final temperature is around 20°C. Then the layer is cut into bars.

To improve the shelf life of the cereal bar, it is important that Aw and moisture are monitored. The overall Aw of the foodstuff product must be below 0.6 in order to prevent microbial growth and food spoilage (moulds and yeast). Final bar Aw is adjusted by lowering binder moisture through evaporation. By lowering the Aw too low, the bar becomes less chewy and crispier, to harder. A too high moisture content will make the bar sticky, very deformable and chewy. A too low moisture content will make the bar crispy, hard, difficult to form evenly.

In an embodiment, the foodstuff product is baked and the baking reduces the water content of the binder. The baking step depends on the product being produced. However, for example, in an embodiment, the baking temperature is between 100 and 200°C, between 120 and 150°C, between 130 and 140°C or between 135 and 145°C.

In an embodiment, the baking time is between 5 and 60 minutes, between 5 and 45 minutes, between 6 and 35 minutes, between 6 and 12 minutes, between 7 and 11 minutes or between 8 and 9 minutes.

In a preferred embodiment of the present invention, the foodstuff, preferably baked foodstuff post-baking, has a total moisture content of less than 10.0wt% based on the weight of the foodstuff, preferably less than 7.5wt%, preferably less than 5.0wt% and preferably less than 3.0wt%. In a preferred embodiment, the moisture content is greater than 0.25wt% or greater than 0.50 wt%. In a preferred embodiment, the moisture content of the foodstuff, preferably baked foodstuff, is between 0.25 and 10.0wt%. Any suitable method for measuring this moisture content is applicable, for instance, by thermogravimetric analysis, e.g. using a drying oven and calculating a loss on drying using the method described herein, or using an infrared moisture analyser.

The foodstuff may be coated with a coating such as a chocolate coating or alike. The thus coated bar may finally be provided with any decorating usual in the confectionary art, for example.

Unless defined otherwise, all technical and scientific terms used herein have and should be given the same meaning as commonly understood by one of ordinary skill in the art to which this invention belongs.

Unless the context clearly indicates otherwise, as used herein plural forms of the terms herein are to be construed as including the singular form and vice versa.

In all ranges defined above, the end points are included within the scope of the range as written. Additionally, the end points of the broadest ranges in an embodiment and the end points of the narrower ranges may be combined.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than 100% to allow a certain percentage for additional amount(s) of any additional component(s) that may not be explicitly described herein.

The term "substantially" as used herein may refer to a quantity or entity to imply a large amount or proportion thereof. Where it is relevant in the context in which it is used "substantially" can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" may similarly denote that quantity or entity to which it refers comprises no more than 20%, preferably no more than 15%, more preferably no more than 10%, most preferably no more than 5%, especially no more than 2%, for example about 0% of the relevant whole. Preferably, where appropriate (for example in amounts of ingredient) such percentages are by weight.

In this invention, the term "consists essentially" of means at least 95.0wt%, more preferably at least 97.5wt%, more preferably at least 98.0wt% and more preferably at least 99.0wt%, preferably up to and including 100.0wt%.

Unless otherwise specified, the percentages listed are by weight.

The present invention is further described by reference to the non-limiting specific examples.

### Examples

### Preparation of Cocoa Pulp Powder for Reference Example 1

Cocoa pods of varieties PH16, Salobrinho and CCN51 were washed in running water. They were then immersed in chlorinated water containing 200 mg /L of free chlorine for 10 minutes. They were then washed with chlorinated water containing 5 mg/L of free chlorine by spraying.

The fruits were broken manually with the help of stainless steel knives. Then, the pulp seeds were separated from the bark.

The pulping was performed on a commercially available fruit pulper using a brush system. The pulp was collected directly in 40 x 50 cm polypropylene plastic bags, which were sealed under vacuum. After packing, the pulps were frozen and stored in Cold Lab ultra-freezer at -80°C.

Lyophilization of the cocoa pulp was conducted on Lio Top equipment for 96 hours in two batches. In each batch, 8 trays were placed with 2.5-3.0 kg / tray.

After the lyophilization process was complete, the trays with dehydrated pulp were removed from the equipment. The lyophilized pulp was removed from the trays and placed in rolled bags, which were then vacuum sealed, providing freeze-dried cocoa pulp powder.

### Preparation of Cocoa Pulp Powder for Reference Examples 2 to 3

Cocoa pods of varieties PH16, Salobrinho and CCN51 were washed in running water. They were then immersed in chlorinated water containing 200 mg /L of free chlorine for 10 minutes. They were then washed with chlorinated water containing 5 mg/L of free chlorine by spraying.

The fruits were broken manually with the help of stainless steel knives. Then, the pulp seeds were separated from the bark.

The pulping was performed on a commercially available fruit pulper using a brush system. The pulp was collected directly in 40 x 50 cm polypropylene plastic bags, which were sealed under vacuum. After packing, the pulps were frozen and stored at -18°C.

### Reference Example 4

Initially the pulps were thawed. Then, for the enzymatic treatment, batches of 3.0 kg of pulp were placed in a jacketed reactor and the temperature was raised to 42.5 ° C with the aid of a thermostatic bath, when the temperature was reached, the enzyme (Pectinex^{®} Ultra Clear, Novozymes) was added under the following conditions:
- Concentration: 1 mL of enzyme / 100 g of pulp
- Temperature: 42.5 ° C
- Reaction time: 60 minutes
- Rotation 100 rpm

Shortly after the enzymatic treatment, heat treatment was performed at 90 ° C for 5 minutes and cooling at 20 ° C. The cooled material was frozen for further lyophilisation treatment.

### Reference Example 5

At the end of the 60 minutes of enzymatic reaction described in Example 4, a sample was taken and enough calcium hydroxide was added to the pulp to adjust the pH to approximately 5.0. The following conditions were used:
12.9 g of Ca(OH)2 were added to each 3 kg of pulp (0.43%);
Mixing was carried out with the mixer at a speed of 200 rpm for about 15 minutes; and
The pasteurization was then carried out at 90° C for 5 minutes and cooled to 20 ° C.

The cooled material was frozen and taken to lyophilization.

Lyophilization of the cocoa pulp was conducted on Lio Top equipment for 96 hours in two batches. In each batch, 8 trays were placed with 2.5-3.0 kg / tray.

After the lyophilization process was complete, the trays with dehydrated pulp were removed from the equipment. The lyophilized pulp was removed from the trays and placed in rolled bags, which were then vacuum sealed, providing freeze-dried cocoa pulp powder.

### Testing

Prior to lyophilisation, the pH of the natural pulp, the enzymatically treated pulp and the bi-treated pulp were found to be 3.52 ± 0.32, 3.36 ± 0.02 and 4.77 ± 0.05 at 20°C, respectively, based on the mean of two sets of measurements.

Viscosity measurements were taken based on the mean of two sets of measurements using a Brookfields RVDV III rheometer at 30 ° C with rotation for 60s.

Apparent viscosity (100 rpm) Apparent viscosity (250 rpm) for natural pulp, 611.5 ± 2.12 and 322.5 ± 3.53, pulp enzymatically treated 400.0 ± 14.14 and 162.5 ± 10.60 and pulp enzymatically treated with pH adjustment 392.5 ± 12.43 and 158 ± 11.32 (all results are reported in centipoise).

Accordingly, it can be seen that the treatment of the present invention provides a reduction in viscosity.

### Reference Example 6

The PH16 and Salobrinho cocoa pulp samples from the above preparation sample were assessed using GC-MS with 500 mg samples. The protocol was as follows:
Preparation of standard:
100 (±1) mg of methyl valerate was weighed into a 10 mL volumetric flask. The flasks were topped up to 10 mL with methanol to obtain the stock solutions of concentrations of 10 g/L. Until use, the solutions were stored in a freezer at approximately -30°C. To prepare the working solutions 50 µL of the stock solution was pipetted into a 100 mL volumetric flask containing approx. 30 mL water. Afterwards the flask was topped up to 100 mL with water and the mixture was homogenised. The working solution was added directly to the sample prior to analysis. The working solution was prepared freshly for different tests.

500 (±5) mg of powdered cocoa pulp was weighed precisely into a 20 mL headspace vial. Afterwards 4 mL of purified water and 50 µL of the working solution were added. The vial was sealed, the mixture was homogenized and the volatile components were extracted from the sample using solid phase micro extraction (SPME). The samples were analyzed in duplicate by means of gas chromatography mass spectrometry (GC-MS). SPME was carried out automatically using a CTC CombiPAL (CTC Analytics, Zwingen, Switzerland). The sample was incubated for 30 min at 60 °C and 300 rpm. Afterwards the volatiles were absorbed onto a divinylbenzene/carboxen/polydimethylsiloxane (DVB/CAR/PDMS) coated fiber (50/30 µm, stable flex/SS, 1 cm, Supelco, Bellefonte, USA) for 30 min at 60 °C and 300 rpm. The odorants were then desorbed into the GC-MS inlet for 10 min at 240 °C, venting to split after 2 min. The fiber was re-used without any additional conditioning for the next extraction.

The samples were analyzed using an Agilent 6890 N gas chromatograph (Agilent, Stockport, UK) and an Agilent 5973 Network MSD (Agilent, Stockport, UK). Gas chromatographic separation was carried out on a BP-20 column (60 m x 0.25 mm i.d.; film thickness 0.25 µm; SGE Analytical Science, Milton Keynes, UK). The sample was injected in splitless mode using an inlet temperature of 240 °C. Helium was used as the carrier gas (flow = 1.5 mL/min). The mass spectrometer was operated in scan mode from m/z 30 to 300 in electron impact (EI) mode using an electron energy of 70 eV. The GC-MS transfer line, ion source and quadrupole temperatures were 280 °C, 230 °C and 150 °C respectively. The oven program started with an isothermal step at 40 °C for 5 min and was ramped to 240 °C at 5°C/min. The oven was then held at 240 °C for 10 min.

The GC-MS data files were converted into MassHunter compatible files using MassHunter GC/MS Translator^{®} B.07.00 (Agilent, Waldbronn, Germany). These files were afterwards imported into MassHunter Unknown Analysis^{®} B.06.00 (Agilent, Waldbronn, Germany).

Deconvolution was performed using an asymmetric window of 0.3 amu to the left and 0.7 amu to the right. Identification was achieved by comparison of the spectra for the deconvoluted peak with the commercially available NIST Mass Spectral Library. Positive hits were revised manually. The peak areas of the target analytes were extracted using m/z values by means of MassHunter Quantitative Analysis^{®} software B.06.00 (Agilent, Waldbronn, Germany). For each analyte the area ratio (peak area (analyte)/ peak area (internal standard)) was calculated and averaged over the repetitions (4 repeats).

| **compound** | **m/z** | **retention time [min]** |
|---|---|---|
| methyl valerate (internal standard) | 74 | 11.93 |
| furfural | 95 | 23.27 |
| 2-pentanol acetate | 87 | 11.62 |
| 2-heptanol acetate | 87 | 17.74 |
| linalool | 93 | 25.43 |

The results are displayed in Figure 1.

### Reference Example 7

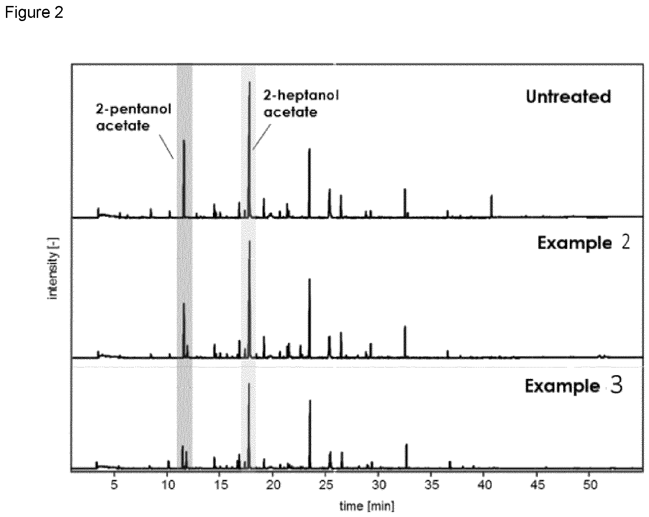

The cocoa pulp samples of Examples 2 and 3 were tested as above and the results are displayed in Figure 2.

### Reference Example 8

Cocoa pulp from a variety of cocoa plants was obtained and frozen at -20°C and then defrosted before undergoing pH adjustment and/or enzymatic treatment. The initial pH of the pulp was 3.0.
pH adjustment:
1.4 g Ca(OH)₂ to 500g Pulp → pH 4
2.0 g Ca(OH)₂ to 500g Pulp → pH 4.5
3.0 g Ca(OH)₂ to 500g Pulp → pH 5

Enzymatic treatment:
500g Pulp + (2.0g) Ca(OH)₂ + 5 mL Depol^{™} → pH 4.5, 2 h, 43 °C
500g Pulp + (3.5g) Ca(OH)₂ + 5 mL Depol^{™} → pH > 6, 2 h, 43 °C

The enzymes were inactivated by treatment for 1 hour at 100 °C in a stove and dried at 80 °C in stove, with 500 cm² drying surface (a 25 x 20 cm tray).

| Sample | Viscosity/cm | Mass/g, pre-Pre | and after 1 hour | drying at 80°C 9 hour |
|---|---|---|---|---|
| No enzyme, pH 3 (natural) | 4.9 cm | 50 g | 8.4 g | 8.3 g |
| No enzyme, pH 4.5 | 4.7 cm | 50 g | 9.4 g | 8.3 g |
| No enzyme, pH 5 | 4.4 cm | 50 g | 11.2 g | 9.3 g |
| No enzyme, pH > 6 | 0.5 cm | 50 g | 11.8 g | 9.6 g |
| + Depol^{™} 793L, pH 4.5 | 5.0 cm | 220 g | 117.5 g | 57.6 g |
| + Depol^{™} 793L, pH > 6 | 0.5 cm | 400 g | 171.2 g | 75.8 g |

The viscosity was measured using a Bostwick consistometer, time fixed to 30 sec and then recording of travelling distance in cm. Measurement carried out when sample cooled to ambient temperature (20.0°C).

Accordingly, the present invention provides materials that are able to be more easily processed during foodstuff manufacture.

### Reference Example 9

The cocoa pulp powders from the preparation example above and Examples 5 and 6 were assessed using HPAEC-PAD to determine the sugar contents using the below procedure:
Samples are dissolved in deionised water at a pH above at room temperature, heated at 70°C for 27 minutes, cooler and centrifuged and a diluted aliquot is prepared. The aliquot is filtered using a 0.2 micron syringe and sugars are separated using an anion exchange polystyrene-divinylbenzene column with aqueous sodium hydroxide as eluent and the eluted carbohydrates are detected using PAD.

| Sugars | Preparation Example 1 /PH16 | Preparation Example 1 /Salobrino | Example 5 | Example 6 |
|---|---|---|---|---|
| DISACCHARIDES | | | | |
| Lactose (g/100g) | Trace | Trace | Trace | Trace |
| Maltose (g/100g) | Trace | Trace | Trace | 0.38 |
| Sucrose (g/100g) | 14.75 | 28.19 | 3.91 | 2.26 |

| MONOSACCHARIDES C6-BODIES | | | | |
|---|---|---|---|---|
| Fructose (g/100g) | 30.51 | 24.78 | 34.28 | 34.48 |
| Fucose (g/100g) | Trace | Trace | Trace | Trace |
| Galactose (g/100g) | Trace | Trace | Trace | Trace |
| Glucose (g/100g) | 28.94 | 23.12 | 33.24 | 33.47 |
| Rhamnose (g/100g) | Trace | Trace | Trace | Trace |
| TOTAL SUGAR g/100g | **74.2** | **76.09** | **71.43** | **70.59** |

The cocoa varieties tested in Examples 5 and 6 are different from those in Preparation Example 1. Additionally, the total sugar content relates to the sugars measured - e.g. does not include any oligosaccharides that may be present.

Additionally, frozen pulp obtained from Ricaeli was dried and assessed as follows.

Total sugars in cocoa pulp samples were measured by high performance anion exchange chromatography with pulsed amperometric detection (HPAEC-PAD). Sugars from samples were extracted in hot water and injected in the HPAEC-PAD system. Neutral sugars being weak acids are partially ionized at high pH and can be separated by anion-exchange chromatography on a base-stable polymeric column (CarboPac PA20). Sugars are detected by measuring the electrical current generated by their oxidation at the surface of a gold electrode.

Total dietary fiber, and its fractions, in cocoa pulp samples were measured by the enzymatic-gravimetric method Rapid Integrated Total Dietary Fiber method as described in Journal of AOAC International, Volume 102, Number 1, January-February 2019, pp. 196-207(12).

Proteins content was determined by Kjeldahl which consists in a sulfuric acid digestion to decompose organic compound and libertate nitrogen as ammonia sulfate. It is followed by a distillation in presence of sodium hydroxide to convert ammonium to ammonia. The ammonia content, thus nitrogen is determined by titration. The amount of nitrogen is converted to proteins by multiplying by the conversion factor 6.25.

Lignin content in cocoa pulp was measured with the AACC International Method 32-25.01.

Raw cocoa pulp is predominantly composed by mono- and disaccharides (79% by weight dry matter) and dietary fiber constitutes 6.5 % of this pulp tested. Soluble dietary fiber of high molecular weight is the main component of the dietary fiber fraction in raw cocoa pulp followed by the insoluble fiber. These results indicate that cocoa pulp fiber does not contain a significant amount of oligosaccharides given that the average degree of polymerization (DP) of Soluble dietary fiber - High molecular weight is ≥ 12 monosaccharide units (Okhuma et al., 2000. J AOAC Int. Volume 83, Number 4, Pages 1013-1019). In addition, a sample of the freeze-dried powder containing the insoluble fiber and soluble dietary fiber- high molecular weight was subjected to analysis with SEC-MALS. For this analysis, the sample was partially dissolved in DMSO and results indicated an average molecular weight of 9.5 kDa, which translates into DP 50-60.

| | % dry matter |
|---|---|
| **Total Solids** | **14 (post-drying)** |
| Lactose | n.a. |
| Maltose | 0.2 |
| Sucrose | 0.2 ± 0.2 |
| Glucose | 38.7 ± 0.1 |
| Fructose | 40.2 ± 0.1 |
| Galactose | n.a. |
| **Total Sugars** | **79.3** |
| **Total Dietary Fiber** | **6.58 ± 0.04** |
| Insoluble dietary fiber | 2.83 ± 0.15 |
| Soluble dietary fiber - High molecular weight | 3.36 ± 0.12 |
| Soluble dietary fiber - Low molecular weight | 0.39 ± 0.00 |
| **Total Protein (N x 6.25)** | **3.68** ± 0.3 |
| **Citric acid** | **9.5** |
| **Lignin** | **0** |

### Example 10

30 g of cocoa pulp from the same source as used in Example 8 was introduced into a Rapid Viscosity Analyser (RVA) aluminium cup and stabilized for 5 min at 40°C under stirring at 50 rpm. Then, 150 µL of liquid enzyme or 150 mg of enzyme powder was added dependent on the enzyme form. Stirring was increased to 960 rpm for 8 s and went back to 50 rpm, temperature remained at 40°C. Temperature was maintained at 40°C for additional 45 min prior to increase up to 90°C for inactivation of the enzyme for 10 min. Average viscosity was calculating the average of the values obtained between time 41 and 49 min of each run. Reduction of viscosity was calculated based on the loss of viscosity versus non-treated sample and was expressed as a percentage.

The polygalacturonase activity was measured at 40°C, hydrolysing polygalacturonic acid (Megazyme P-PGAT) at 5.0 g/mL in 100 mM acetate buffer pH 4.5. Samples were taken out after exactly 2, 4, 6, 8, 10 and 12 min to establish kinetic curves. DNS reagent solution (1% 3,3-dinitrosalicylic acid + 1.6 % NaOH + 40% K Na tartrate tetrahydrate) was immediately added to stop the enzymatic reaction and color the released reducing ends, boiling the samples for 10 min. Finally, the Absorbance was read at 540 nm. Galacturonic acid was used as standard to establish the calibration curve.

Enzyme assay: modified endo-cellulase CellG5 kit procedure from Megazyme. The cellulase activity was measured at 37°C, in 100 mM acetate buffer pH 4.5 containing 1g/L bovine serum albumin. The enzymatic reaction was stopped after exactly 2, 4, 6, 8, 10 and 12 min to establish kinetic curves, adding 2% TRIS buffer pH 10.0. Finally, the absorbance was read at 405 nm. P-nitrophenol was used as standard to establish the calibration curve. An average of 3 readings was taken.

| **Enzyme** | **Reduction in viscosity/ %** | **Activity/ PGN micromole/min/g** | **Activity/ Cellulase/ micromole/min/g** |
|---|---|---|---|
| Cellulosin GMY (Ueda) | 96.3 | 475 | 2500 |
| Cellulase FG conc | 93.9 | 426 | 2380 |
| Rapidase^{®} Fibre (DSM) | 73.3 | 2599 | 159 |
| Pectinex^{®} Ultra Clear (Novozyme) | 72.7 | 10347 | 31 |
| Rohapect ^{®} B1L (AB Enzymes) | 72.4 | 9 | 333 |
| Pectinex^{®} UF(Novozyme) | 71.7 | 3573 | 7 |
| Pectinex^{®} Ultra Color (Novozyme) | 71.6 | 9609 | 42 |
| Klerzyme 150 (DSM) | 69.9 | 4342 | 43 |
| Pectinex^{®} Ultra SP-L (Novozyme) | 69.8 | 3596 | 6 |
| Cellulosin HC (Ueda) | 68.6 | 122 | 514 |
| Hemicellulase conc (Sigma) | 61.3 | 2311 | 142 |
| Maxinvert L10000 (DSM) | 4.79 | 0 | 0 |
| Aromase ^{®} (Amano Enzyme Europe) | 1.23 | 41 | 5 |

### Example 11

The following studies were carried out. 100g pouches of frozen cocoa pulp were purchased from Ricaeli. The reference pulp viscosity was 9.5 cm as measured using the Bostwich consistometer set out above. 800g of pulp at 4.5 pH was used and treated with Pectinex^{®} Ultra SP-L.

| **Enzyme Loading/ vol % (ml)** | **Enzyme Treatment time/ hour** | **Temperature/ deg C** | **Ca(OH)₂ 20 w/v % - g/100 ml/ ml** | **Viscosity/ cm** | **Reduction in viscosity/ %** |
|---|---|---|---|---|---|
| 0.5 | 0.75 | 30 | 5 | 12 | 28 |
| 0.5 | 3.25 | 30 | 5 | 13 | 38.9 |
| 0.5 | 5.25 | 30 | 5 | 13.5 | 42 |

### Reference Example 12

The evaporator EVAPOR Model CEP-1, Spinning Cone Centrifugal-flow Thin-film Vacuum Evaporator was used to obtain a concentrate.

The powder was obtained by using a 1.1 m spray-dryer.

Cocoa pulp pH was first adjusted from 3.5 to 4.5.

Enzymatic treatment was performed with 0.5% Pectinex Ultra-Clear enzyme during 1 hour at 40 °C. The reaction was stopped by a high treatment at 90°C during 10 min.

The pH was then adjusted again to 5 and the cocoa pulp was concentrated from a Total Solid of 25% to a Total Solid of 35%, corresponding to a maximum viscosity for spray-drying of 35 mPa.s (with 30% cocoa powder in wet basis, i.e. 6% cocoa powder in dry basis).

The evaporation temperature (spinning cone temperature) was 80°C and the pressure in the chamber was 60 mbar.

Hydrolyzed cocoa pulp and cocoa powder were weighed separately and then mixed with a polytron PT3000D mixer until full dissolution at room temperature with a speed rate between 6000 and 12000 rpm.

The inlet solution is transferred in a vessel at controlled temperature of 55°C and is then pumped at 50 bar. After a pre-heating at 60°C, the solution was spray-dried according to the parameters listed in the table below:

| Spray-drying parameters | |
|---|---|
| Nozzle | High Pressure nozzle |
| Inlet air temperature | 120°C |
| Output temperature | 80°C |
| Drying air volume | 760 m3 |
| Pump pressure | 50 bars |
| Solution flowrate | 23 L/h |

The dried product may be rehydrated to form a binder within the present invention.

### Example 13

10kg of cocoa pulp from Ricaeli as used in Reference Example 11 was drained through a cheese-cloth style muslin to remove the majority of fibre present to yield 5.85kg of juice. The juice was transferred to a saucepan and heated on a stove. The juice is heated for approximately 1.5 hours start to finish at a low simmer using a 1000W heater. The syrup heating was stopped at a Brix value of 88% (measured using a hand refractometer).

The syrup binder was analysed and found to have a water activity of 0.563, a total dietary fibre content of 3.31wt%, a fructose content of 32.6wt%, a glucose content of 32.6wt% and a water content (measured by oven drying) of 18.4wt%.

The methods used to measure these parameters are as specified above.

### Example 14

Dried materials were weighed out and frozen enzyme treated pulp from Reference Example 12 (concentrated to contain approximately 20-25wt% water) is added to bowl in the following amounts:

| **Material** | **Quantity (g)** |
|---|---|
| Cocoa pulp binder | 60 |
| Brazil nuts | 60 |
| Cashew nuts | 150 |
| Cocoa nibs | 20 |

Mixture is stored in a hot room (approximately 30 deg C) for 10 minutes, the mixture is stirred in 1.5 kg Hobart mixer for 45 seconds at speed 1 using a beater and then is spread in a thin layer on a baking tray and put in the oven at 105 ∘c for 30 minutes. The baked slab is cooled down for 15 minutes and broken in to separate clusters.

The enzymatic pre-treatment yielded a single ingredient binder that was processable and provided products with an acceptable texture.

### Reference Example 15

50kg of cocoa pulp were treated with 15M KOH to provide a pH of 4.5. The mixture was treated with a combination of 125g each of Cellulosin GMY and Pectinex Ultra Clear (0.25wt% on a wet basis each). Treatment is for 1 hour at 43 deg C and then stopped. The pH is increased again to 5.0 using KOH, concentrated by evaporation and 4.6 kg of cocoa powder (added at 10% wet basis) and then spray dried as above to give approx. 7kg of dried material.

### Reference Example 16

The dried pulp of Example 12 was assessed using the above-mentioned methods for measuring sugars and total dietary fibres. The fructose and dextrose content was 70wt% of the dried pulp and the total dietary fibre was 12wt%.

## Claims

1. A process for preparing a foodstuff product comprising the steps of i) blending a food-pieces mix, with a binder, and ii) forming a foodstuff product from said mixture, wherein said binder comprises or consists essentially of ingredients derived from pulp from a plant in the theobroma genus and/or an extract of pulp from a plant in the theobroma genus, wherein the food-pieces mix is combined with the binder to provide a composition comprising between 7wt% and 45wt% binder by weight of the composition.

2. The process of claim 1, wherein the pulp or extract of pulp is cocoa pulp or an extract of cocoa pulp.

3. The process of either of claims 1 or 2, wherein the food-pieces mix is combined with the binder to provide a composition comprising between 10wt% and 45wt% binder by weight of the composition.

4. The process of any of claims 1 to 3, wherein the food-pieces mix is combined with the binder to provide a composition comprising between 55wt% and 90wt% food piece mix by weight of the composition.

5. The process of any of claims 1 to 4, wherein the binder comprises water in an amount of greater than 5% by weight of the binder and in an amount of less than 30% by weight of the binder.

6. The process of any of claims 1 to 5, wherein the binder comprises a total solids content of between 70% by weight and 95% by weight of the binder.

7. The process according to any one of claims 1 to 6, wherein the food-pieces mix comprises-pieces selected from fruit-pieces, nut-pieces, cereal-pieces, chocolate-product-pieces, fish-pieces, meat-pieces, dairy-pieces and vegetable-pieces and mixtures thereof.

8. The process of any of claims 1 to 7, wherein the pulp and/or pulp extract has been treated to reduce the polysaccharide content.

9. The process of claim 8, wherein the treatment comprises treatment with an enzyme to reduce the polysaccharide content.

10. The process of claims 8 or 9, wherein the treatment comprises the reduction of the pectin content and/or cellulose content in the pulp or extract of pulp.

11. The process of claim 10, wherein treatment comprises treatment with a pectinase and/or a cellulase.

12. The process of any of claims 9 to 11, wherein the enzyme treatment is carried out between 20°C and 75°C for between 10 minutes and 20 hours.

13. The process of any of claims 9 to 12, wherein the pulp or extract of pulp is treated to increase the pH to be greater than pH 3.0.

14. A foodstuff product comprising multiple food-pieces bound together with a binder, wherein said binder comprises or consists essentially of ingredients derived from pulp from a plant in the theobroma genus and/or an extract of pulp from a plant in the theobroma genus and the binder is present in an amount of between 7wt% and 45wt% of the foodstuff product.

## Patentansprüche

1. Verfahren zum Herstellen eines Nahrungsmittelprodukts, umfassend die Schritte i) Vermengen einer Mischung aus Nahrungsstücken mit einem Bindemittel und ii) Ausbilden eines Nahrungsmittelprodukts aus der Mischung, wobei das Bindemittel hauptsächlich Zutaten umfasst oder aus diesen besteht, die von Fruchtfleisch von einer Pflanze der Gattung Theobroma und/oder einem Fruchtfleischextrakt von einer Pflanze der Gattung Theobroma stammen, wobei die Mischung aus Nahrungsstücken mit dem Bindemittel kombiniert wird, um eine Zusammensetzung bereitzustellen, umfassend zu zwischen 7 Gew.-% und 45 Gew.-% Bindemittel, bezogen auf das Gewicht der Zusammensetzung.

2. Verfahren nach Anspruch 1, wobei das Fruchtfleisch oder das Fruchtfleischextrakt Kakaofruchtfleisch oder ein Kakaofruchtfleischextrakt ist.

3. Verfahren nach Anspruch 1 oder 2, wobei die Mischung aus Nahrungsstücken mit dem Bindemittel kombiniert wird, um eine Zusammensetzung bereitzustellen, umfassend zwischen 10 Gew.-% und 45 Gew.-% Bindemittel, bezogen auf das Gewicht der Zusammensetzung.

4. Verfahren nach einem der Ansprüche 1 bis 3, wobei die Mischung aus Nahrungsstücken mit dem Bindemittel kombiniert wird, um eine Zusammensetzung bereitzustellen, umfassend zu zwischen 55Gew.-% und 90 Gew.-% die Mischung aus Nahrungsstücken, bezogen auf das Gewicht der Zusammensetzung.

5. Verfahren nach einem der Ansprüche 1 bis 4, wobei das Bindemittel Wasser in einer Menge von mehr als 5 Gew.-% des Bindemittels und in einer Menge von weniger als 30 Gew.-% des Bindemittels umfasst.

6. Verfahren nach einem der Ansprüche 1 bis 5, wobei das Bindemittel einen Gesamtfeststoffgehalt zu zwischen 70 Gew.-% und 95 Gew.-% des Bindemittels umfasst.

7. Verfahren nach einem der Ansprüche 1 bis 6, wobei die Mischung aus Nahrungsstücken Stücke umfasst, die aus Fruchtstücken, Nussstücken, Getreidestücken, Schokoladenproduktstücken, Fischstücken, Fleischstücken, Milchproduktstücken und Gemüsestücken und Mischungen davon ausgewählt sind.

8. Verfahren nach einem der Ansprüche 1 bis 7, wobei das Fruchtfleisch und/oder der Fruchtfleischextrakt behandelt wurde, um den Polysaccharidgehalt zu verringern.

9. Verfahren nach Anspruch 8, wobei die Behandlung eine Behandlung mit einem Enzym, um den Polysaccharidgehalt zu verringern, umfasst.

10. Verfahren nach Anspruch 8 oder 9, wobei die Behandlung die Verringerung des Pektingehalts und/oder Zellulosegehalts in dem Fruchtfleisch oder Fruchtfleischextrakt umfasst.

11. Verfahren nach Anspruch 10, wobei die Behandlung eine Behandlung mit einer Pektinase und/oder einer Cellulase umfasst.

12. Verfahren nach einem der Ansprüche 9 bis 11, wobei die Enzymbehandlung zwischen 20 °C und 75 °C zwischen 10 Minuten und 20 Stunden lang ausgeführt wird.

13. Verfahren nach einem der Ansprüche 9 bis 12, wobei das Fruchtfleisch oder das Fruchtfleischextrakt behandelt wird, um den pH-Wert zu erhöhen, um über einem pH-Wert von 3,0 zu liegen.

14. Nahrungsmittelprodukt, umfassend mehrere Nahrungsstücken, die mit einem Bindemittel zusammengebunden werden, wobei das Bindemittel hauptsächlich Zutaten umfasst oder aus diesen besteht, die von Fruchtfleisch von einer Pflanze der Gattung Theobroma und/oder einem Fruchtfleischextrakt von einer Pflanze der Gattung Theobroma stammen, und das Bindemittel in einer Menge zu zwischen 7 Gew.-% und 45 Gew.-% des Nahrungsmittelprodukts vorhanden ist.

## Revendications

1. Procédé de préparation d'un produit alimentaire comprenant les étapes consistant à i) mélanger un mélange de morceaux d'aliments avec un liant, et ii) former un produit alimentaire à partir dudit mélange, dans lequel ledit liant comprend ou est constitué essentiellement d'ingrédients dérivés de la pulpe d'une plante du genre theobroma et/ou d'un extrait de pulpe d'une plante du genre theobroma, dans lequel le mélange de morceaux d'aliments est combiné avec le liant pour fournir une composition comprenant entre 7 % en poids et 45 % en poids de liant en poids de la composition.

2. Procédé selon la revendication 1, dans lequel la pulpe ou l'extrait de pulpe est de la pulpe de cacao ou un extrait de pulpe de cacao.

3. Procédé selon l'une quelconque des revendications 1 ou 2, dans lequel le mélange de morceaux d'aliments est combiné avec le liant pour fournir une composition comprenant entre 10 % en poids et 45 % en poids de liant en poids de la composition.

4. Procédé selon l'une quelconque des revendications 1 à 3, dans lequel le mélange de morceaux d'aliments est combiné avec le liant pour fournir une composition comprenant entre 55 % en poids et 90 % en poids de mélange de morceaux d'aliments en poids de la composition.

5. Procédé selon l'une quelconque des revendications 1 à 4, dans lequel le liant comprend de l'eau dans une proportion supérieure à 5 % en poids du liant et dans une proportion inférieure à 30 % en poids du liant.

6. Procédé selon l'une quelconque des revendications 1 à 5, dans lequel le liant comprend une teneur totale en solides comprise entre 70 % en poids et 95 % en poids du liant.

7. Procédé selon l'une quelconque des revendications 1 à 6, dans lequel le mélange de morceaux d'aliments comprend des morceaux choisis parmi des morceaux de fruits, des morceaux de noix, des morceaux de céréales, des morceaux de produits chocolatés, des morceaux de poisson, des morceaux de viande, des morceaux de produits laitiers et des morceaux de légumes, ainsi que des mélanges de ceux-ci.

8. Procédé selon l'une quelconque des revendications 1 à 7, dans lequel la pulpe et/ou l'extrait de pulpe ont été traités pour réduire la teneur en polysaccharides.

9. Procédé selon la revendication 8, dans lequel le traitement comprend un traitement avec une enzyme pour réduire la teneur en polysaccharides.

10. Procédé selon les revendications 8 ou 9, dans lequel le traitement comprend la réduction de la teneur en pectine et/ou de la teneur en cellulose de la pulpe ou de l'extrait de pulpe.

11. Procédé selon la revendication 10, dans lequel le traitement comprend le traitement avec une pectinase et/ou une cellulase.

12. Procédé selon l'une quelconque des revendications 9 à 11, dans lequel le traitement enzymatique est effectué entre 20 °C et 75 °C pendant entre 10 minutes et 20 heures.

13. Procédé selon l'une quelconque des revendications 9 à 12, dans lequel la pulpe ou l'extrait de pulpe est traité pour augmenter le pH jusqu'à ce qu'il soit supérieur au pH 3,0.

14. Produit alimentaire comprenant de multiples morceaux d'aliments liés par un liant, dans lequel ledit liant comprend ou est constitué essentiellement d'ingrédients dérivés de la pulpe d'une plante du genre theobroma et/ou d'un extrait de pulpe d'une plante du genre theobroma et le liant est présent dans une quantité comprise entre 7 % en poids et 45 % en poids du produit alimentaire.
